(19) Europäisches Patentamt / European Patent Office / Office européen des brevets

(11) **EP 3 139 132 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(51) Int Cl.:
*G01D 5/249* (2006.01)   *G01D 5/347* (2006.01)
*G06K 7/14* (2006.01)   *G06K 7/10* (2006.01)
*G06K 19/06* (2006.01)

(21) Anmeldenummer: **15183761.4**

(22) Anmeldetag: **03.09.2015**

(54) **FLÄCHEN-ABSOLUTCODIERUNG**

SURFACE ABSOLUTE ENCODING

CODAGE ABSOLU DE SURFACES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.03.2017 Patentblatt 2017/10**

(73) Patentinhaber: **Hexagon Technology Center GmbH**
**9435 Heerbrugg (CH)**

(72) Erfinder:
• **FRITSCH, Robert**
**CH-9436 Balgach (CH)**
• **JORDIL, Pascal**
**CH-1612 Ecoteaux (CH)**

(74) Vertreter: **Kaminski Harmann Patentanwälte AG**
**Landstrasse 124**
**9490 Vaduz (LI)**

(56) Entgegenhaltungen:
**EP-A2- 2 056 233**   **WO-A1-02/084473**
**WO-A1-2004/102123**

EP 3 139 132 B1

**Beschreibung**

Die Erfindung betrifft eine Massverkörperung mit einem Flächen-Positionscodemuster nach Anspruch 1 sowie ein absolutes Messsystem mit einer Massverkörperung nach Anspruch 10, als auch ein Verfahren zur Absolutpositionscodierung von Oberflächen mit einem Absolutcodemuster nach Anspruch 12, ein Verfahren zur Auswertung einer Massverkörperung nach Anspruch 14 sowie ein Computerprogrammprodukt nach Anspruch 15.

In vielen Anwendungsfällen muss eine Positionsbestimmung in zwei oder mehr Freiheitsgraden erfolgen. Beispielsweise werden bei Koordinatenmessmaschinen meist mehrere Positionen und/oder Lagen von eindimensionalen Bewegungsachsen bestimmt, welche zu einer Koordinateninformation eines Messkopfes verknüpft werden, mit welchem Messkopf geometrische oder andere physikalische Eigenschaften des zu vermessenden Messobjekts bestimmt werden. Ein anderes Beispiel sind etwa Bearbeitungsmaschinen, bei welchen ein Werkzeug in Bezug auf einen Koordinatentisch vermessen oder positioniert werden soll. Neben dem klassischen Ansatz, hierzu eine kartesische Anordnung von zwei Lagegebern, jeweils für eine X- und eine Y-Richtung, oder für Polarkoordinaten zu verwenden, ist es erstrebenswert, die Position nur mit einem einzigen Lagegeber für beide Richtungen zu erfassen. Dabei muss die Fläche, auf welche die ermittelte Position und/oder Lage bezogen ist, nicht zwingend plan sein, sondern kann auch sphärisch oder als beliebige Freiformfläche ausgestaltet sein. Als Beispiel sei hier ein, in drei Freiheitsgraden bewegliches Kugelgelenk angeführt, insbesondere ein Gelenk eines Gelenkarms (Articulated Arm) oder ähnlichem.

Zur Positionsbestimmung zeigt EP 1 147 376 beispielsweise eine Phasenmessung mit einer analogen Berechnung der Korrelation mit Sin/Cos für Inkrementalsensoren. EP 1 750 099 ergänzt eine derartige Phasenmessung mit Sin/Cos-Korrelation um eine zusätzliche Schätzung der Frequenz mittels FFT (Fast Fourier Transformation). Für die dabei angewandte Korrelation mit Sinus- und Kosinus-Funktionen zur Detektion von periodischen Mustern werden in der Regel Flächensensoren wie CCD- oder CMOS-Sensoren verwendet. Unter Verwendung derartiger Array- oder Flächensensoren beschreibt beispielsweise DE 699 33 050 eine Berechnung einer Korrelation mit Sin/Cos für Inkrementalsensoren. In EP 1 750 099 wird neben der Phasenmessung auch eine Schätzung der Frequenz mit Hilfe einer Fast Fourier Transformation (FFT) vorgeschlagen. DE 60 2004 009 429 oder EP 2 169 357 beschreiben unter anderem ein Aufsummieren von Zeilen und/oder Spalten eines derartigen optischen Flächensensors bei dessen Auswertung.

Insbesondere für industrielle Anwendungen ist dabei eine inkrementelle Positionsbestimmung, wie diese beispielsweise bei optischen Computer-Mäusen Anwendung findet, zu ungenau bzw. zu fehleranfällig. Es ist daher eine absolute Positionsbestimmung in Bezug auf eine Fläche bereitzustellen, welche eine eindeutige Raum-Position und vorzugsweise zusätzlich auch eine Raum-Lage eines Sensors in Bezug auf eine Referenzfläche oder auf ein zu vermessendes Objekt bestimmbar macht. Beispielsweise zeigt EP 2 546 613 eine verschachtelte Codierung aus Inkremental- und Absolutcode oder WO 2010/112082 zeigt eine Phasenberechnung einer manchestercodierten Absolutskala. In EP 1 099 936 wird eine Kombination aus einer absoluten und einer relativen 2D-Codierung genutzt. EP 1 473 549 zeigt eine Absolutcodierung in jeder Zelle und in EP 2 169 357 ist eine verschachtelte Codierung aus Inkremental- und Absolutcode mit einer zusätzlichen Schätzung einer Verdrehung mittels einer 2D-FFT gezeigt.

Andere Beispiele für Flächencodes finden sich etwa in EP 2 133 824, US 6,548,768, US 2007/0246547 oder WO 01/26032, wobei es sich dabei nicht um fortlaufende Positionscodes für einen Positionsgeber zur genauen Positions- und/oder Lagenbestimmung handelt, welcher für industrielle Koordinatenmessgeräte anwendbar ist, sondern um Flächencodes zur Kennzeichnung von grösseren Bereichen mit einem jeweils dem Bereich zugehörigen Absolutwert. Dies hängt Beispielsweise auch damit zusammen, dass in obigen Dokumenten die Codes nur punktuell abgetastet, ausgelesen und ausgewertet werden, wohingegen ein Code für einen Lagegeber-Sensor entsprechend der vorliegenden Erfindung sich kontinuierlich über die Codefläche bewegt und dabei seine Position und/oder Orientierung mit einer Auflösung erfasst, welche über jene der reinen Codewortinformation hinausgeht. Speziell wird also in einer erfindungsgemässen Anwendung nicht nur eine Codierung, sondern auch eine genaue Lage der ausgelesenen Codemarken der Absolut-codierung relativ zum Sensor ausgewertet.

WO2004/102123 A1 und WO02/084473 A1 sind weitere Beispiele von Positionscodemustern.

Flächencodes nach dem Stand der Technik sind also zumeist inkrementell, oder diese Stellen keinen fortlaufenden Positionscode dar, sondern codieren lediglich Bereiche oder Gebiete mit jeweils zugehörigen Codewörtern, wie etwa bei Code-Lesestiften für Papierwaren in Unterhaltungsartikeln odgl. Bei diesen wird der Lesestift immer punktuell angesetzt und an diesem jeweiligen Punkt ein Codewort ermittelt. Dahingegen sind Ausführungsformen eines vorliegenden Positionscodes dazu ausgebildet, dass ein Lesekopf, vorzugsweise kontinuierlich, über die Codefläche bewegt wird, und dabei Positionswerte ermittelt werden, welche genauer sind als die reinen, gelesenen Absolutcodewerte - also insbesondere bei der Auswertung auch eine Lage von einer oder mehreren der codewertbildenden Codemarken in Bezug auf den auslesenden Sensor berücksichtigt wird.

Zudem muss im Stand der Technik meist ein verhältnissmässig grosser Codeflächenanteil von einer entsprechend grossen Sensorfläche erfasst werden, um eine grosse Fläche absolut codieren zu können. Vielfach wird auch ein beträchtlicher Teil der Codefläche für eine nicht zum Codewert beitragende Referenz-Struktur verwendet. Auch sind die Bildungsgesetze der Stand der Technik verwendeten Codes oft kompliziert, was zu erhöhtem Decodieraufwand bzw. langsamer Auswertung führt.

Im Gebiet der hier beschriebenen absoluten Flächen-Positionscodierung sollen eine Position und/oder eine Verdrehung in hoher Genauigkeit bestimmbar sein. In einer speziellen Ausführungsform können zusätzlich auch Verkippungen und/oder ein Abstand des Sensors zu der codierten Fläche bestimmt werden, zumindest mit einer geringeren Genauigkeit und/oder einem geringeren Messbereich als dies in den primär ausgewerteten Freiheitsgraden des 2D-Flächencodes der Fall ist. Damit können beispielsweise allfällige Fehlstellungen oder Abweichungen, z.B. durch Justierungsfehler, Verformungen, Temperaturdehnungen, etc. qualifiziert und/oder quantifiziert werden, und diese mechanisch oder numerisch, zumindest teilweise kompensiert werden.

Es ist daher eine Aufgabe der vorliegenden Erfindung, eine Absolut-Codierung für Flächensensoren bereitzustellen, mit deren Hilfe absolute Positionen in mindestens zwei Freiheitsgraden bestimmbar sind.

Eine Aufgabe der vorliegenden Erfindung kann dabei in einer Bereitstellung einer verbesserten Code-Skala bzw. eines verbesserten Sensors, eines entsprechenden Messsystems und einer verbesserten Methode zur Bestimmung von Positionen und/oder Ausrichtungen eines Sensors in Bezug auf eine von diesem abgetastete Oberfläche gesehen werden, mit welchen einfach aber präzise die absolute Position/Lage bestimmbar ist, vorzugsweise in zwei, drei oder mehr Dimensionen.

Dabei ist eine weiterführende, spezielle Aufgabe, dass dabei auch eine Abweichung eines Positionssensors aus seiner Ideallage zum Code-Muster bestimmbar ist, insbesondere um bis zu sechs Freiheitsgrade erfassbar zu machen.

Es ist insbesondere eine Aufgabe, einen grossen Messbereich mit hoher Positionsauflösung absolut erfassbar zu machen, insbesondere ohne dafür einen verhältnismässig grossen Ausschnitt des Codemusters erfassen zu müssen und/oder eine rechenintensive, störanfällige Auswertung des erfassten Codeausschnitts zu benötigen.

Ein Teil der Aufgabe ist es auch, neben dem Flächencode einen entsprechenden, zugehörigen Flächen-Sensorchip bereitzustellen, welcher zur vorteilhaften Auswertung des Flächencodes ausgebildet ist. Entsprechend kann es auch als Aufgabe gesehen werden, ein System und eine Methode zur Absolut-Positionscodierung einer Fläche bereitzustellen.

Diese Aufgabe wird erfindungsgemäss durch die Merkmale der unabhängigen Ansprüche und/oder durch Merkmale der abhängigen Ansprüche gelöst bzw. werden darin diese Lösungen weitergebildet.

Die vorliegende Erfindung betrifft ein Flächen-Positionscodemuster bzw. eine Massverkörperung mit einem derartigen Flächen-Positionscodemuster. Dieses hat eine Anordnung von Codemarken in einem Grundraster.

Von dem Flächen-Positionscodemuster ist zumindest ein Teilausschnitt mit einem Matrix-Sensor zur Positionsbestimmung in zumindest zwei Freiheitsgraden oder in mehr als zwei Freiheitsgraden (z.B. 3 ,4 ,5 oder 6 Freiheitsgraden). Der Matrix-Sensor kann dabei insbesondere ein optischer Matrix-Sensor wie einem CCD- oder CMOS-Sensor sein.

Erfindungsgemäss ist eine erste Absolutcodefolge in einer Aneinanderreihung der Codemarken in einer ersten Zeilenrichtung des Grundrasters als erste Zeile auf der zu codierenden Fläche ausgebildet, und entlang einer, auf die erste Zeile folgenden zweiten Zeile sind die Codemarken in der Zeilenrichtung mit einer zweiten Absolutcodefolge codiert. Erfindungsgemäß sind die erste Absolutcodefolge und die zweiten Absolutcodefolge zueinander Codewortfremd. Beispielsweise sind die erste und zweite Absolutcodefolge jeweils Teile einer einzigen, gemeinsamen Maximalfolge, welche in die zumindest zwei Teile mit unterschiedlichen primären Periodenlängen geteilt ist.

Dabei bilden die erste und die zweite Zeile ein Zeilenpaar, und in einem darauf folgenden Zeilenpaar sind die Absolutcodefolgen im Zeilenpaar jeweils in der Zeilenrichtung im Grundraster gegenüber dem vorangehende Zeilenpaar versetzt angeordnet, insbesondere um eine Periode des Grundrasters.

Mit anderen Worten kann zusammenfassend bei der vorliegenden Erfindung mittels eines verhältnismässig kleinen Flächensensors eine sehr grosse Fläche mit einem absoluten, mehrdimensionalen Positionscode versehen werden.

In einer weiterführenden Ausführungsform kann dabei zudem auch eine Verdrehung des Sensors auf der Fläche sehr genau bestimmt werden. Werden bei dem erfindungsgemässen 2-D-Code zusätzlich Flächengrössen und/oder Punktabständen der Codemarken ausgewertet, so sind bis zu sechs Freiheitsgrade bestimmbar, wovon die drei in der Codeflächen-Ebene liegenden Freiheitsgrade mit einer höheren Genauigkeit bestimmbar sind. Insbesondere in einer Ausführungsform, bei welcher eine Zerlegung einer einzigen Maximalfolge in zwei elementfremde Folgen angewandt wird, gestaltet sich dabei die Decodierung verhältnismässig einfach. Zudem ist eine erfindungsgemässe Flächencodierung in ihrer Skalierung jeweils optimal an die jeweilige Anwendung anpassbar.

Das Flächen-Positionscodemuster kann mit einheitlichen, uniformen Codemarken aufgebaut sein, vorzugsweise mit Codemarken mit konvexen Aussenkonturen.

Beim Flächen-Positionscodemuster können die Codemarken mittels des Flächensensors beispielsweise anhand ihrer Volumenschwerpunkte in ihrer Position in Bezug auf den Flächensensor und/oder anhand ihres Volumens in ihrer Grösse erfasst werden.

Dabei kann eine Wertcodierung einer der Codemarken in Form einer geometrischen Abweichung der Codemarke von einer Sollposition im Grundraster ausgebildet sein. Insbesondere kann dabei das Grundraster orthogonal oder hexagonal sein. Die Abweichung kann im Verhältnis zum Rasterabstand gering gehalten werden, beispielsweise kleiner als 1/3 oder vorzugsweise in etwa 1/10 einer Periode des Grundrasters.

Die erste Absolutcodefolge und die zweite Absolutcodefolge kann dabei derart ausgebildet sein, dass beide dieselbe Coderichtung im Grundraster aufweisen, insbesondere also nichtorthogonal zueinander stehen, bei ebenen Flächen also vorzugsweise zumindest annähernd parallele Coderichtungen aufweisen.

Die Erfindung betrifft auch ein absolutes Messsystem mit einer Massverkörperung mit einem solchen Flächen-Positionscodemuster und einem zugehörigen Flächensensor zur Schwerpunktsbestimmung von Codemarken, insbesondere von Codemarken eines hier beschriebenen Flächen-Positionscodemusters. Der Flächensensor kann dabei derart ausgebildet sein, dass mit einem Array von Sensorelementen, insbesondere mit einer regelmässigen zweidimensionalen Anordnung der Sensorelemente, eine zeilenweise Auslesung des Arrays erfolgt. Bei dieser Auslesung ist für eine Zeile des Arrays, von einem Überschreiten eines definierten Sumpf-Schwellenwerts durch den ausgelesenen Wert bei einem ersten Sensorelement, bis zu einem Unterschreiten des Sumpf-Schwellwerts bei einem zweiten Sensorelement der jeweiligen Zeile, ein Integrieren der ausgelesenen Werte der Sensorelemente dieser Zeile des Arrays in einen Summenwert durchführbar. Der Flächensensor kann dabei Beispielsweise derart ausgebildet sein, dass dieser ein analoges Schieberegister für die in den Pixeln gesammelten photoinduzierte Elektronen aufweist, mit welchem selektiv die Photoladungen von mehren Pixeln in einen gemeinsamen Akkumulator (z.B. Potentialtopf) verschoben und dort akkumuliert, also aufsummiert werden können.

Die Ansteuerung der Integration oder Integralbildung im Akkumulator kann in (primärer) Abhängigkeit des Schwellenwert-Vergleichs erfolgen, welcher sozusagen die Integrationsgrenzen vorgibt. Ebenso können das Auswerten und/oder das Löschen der Integration primär in Abhängigkeit des Schwellenwertvergleichs erfolgen. Für diese Zwecke kann der Flächensensor zur Schwerpunktsbestimmung hardwaremässig entsprechen ausgebildet sein. Auch kann der erfindungsgemässe Flächensensor zur Schwerpunktsbestimmung mit einer Schaltung zur Bereitstellung der Pixel-Indices der Schwellwertüberschreitung und/oder Schwellwertunterschreitung ausgebildet sein.

Dabei werden jeweils ein erster Positionsindex des ersten Sensorelements und ein zweiter Positionsindex des zweiten Sensorelements entlang der Sensorzeile erfasst. Vom Flächensensor werden der Summenwert, sowie der erste Positionsindex und der zweite Positionsindex bereitgestellt. Insbesondere kann das Bereitstellen dabei in digitalisierter Form erfolgen, speziell indem der Flächensensor einen Analog-Digital-Wandler aufweist oder mit einem solchen verbunden ist.

Der Flächensensor kann einen analogen Akkumulator aufweisen, welcher derart ausgebildet ist, dass mittels diesem das Integrieren der ausgelesenen Werte der Sensorelemente analog erfolgt. Insbesondere kann der Flächensensor derart ausgebildet sein die dabei ermittelte analoge Summe aus dem Akkumulator analog-digital gewandelt wird.

Der Flächensensor kann auch zumindest einen analogen Komparator aufweisen, welcher derart ausgebildet ist, dass mittels diesem das Überschreiten und/oder Unterschreiten des definierten Sumpf-Schwellenwerts eines ausgelesenen Wertes der Sensorelemente ermittelt wird. Insbesondere kann der Flächensensor dabei derart ausgebildet sein, dass der Positionsindex des betreffenden über- und/oder unterschreitenden ausgelesenen Sensorelements anhand eines Zählers einer Austaktung der Sensorelemente in der betreffenden Zeile ermittelbar ist.

Der Flächensensor kann auch zumindest eine analoge Subtraktionsschaltung aufweisen, welche derart ausgebildet ist, dass mittels dieser vor dem Integrieren jeweils der Sumpf-Schwellwert von den ausgelesenen Werten der Sensorelemente abgezogen wird und die daraus resultierenden, positive Differenzwerte Integriert werden. Dabei kann der Flächensensor insbesondere derart ausgebildet sein, dass das Überschreiten und/oder Unterschreiten des definierten Sumpf-Schwellenwerts anhand des Vorzeichens der Differenzwerte ermittelt wird.

Der Flächensensor kann zudem eine Recheneinheit aufweisen, welche ausgebildet ist aus dem ersten und zweiten Positionsindex und der Summe einen Schwerpunkts-Positionsindex zu ermitteln. Dieser Positionsindex kann insbesondere auch einen fraktionalen Anteil aufweisen.

Der Flächensensor kann zumindest eine zweite, vorzugsweise analoge, Integratorschaltung aufweist, welche derart ausgebildet ist, dass mit dieser über mehrere der Zeilen hinweg die Summen der einzelnen Zeilen für überlappende Positionsindices integrierbar sind.

Die Erfindung betrifft folglich ebenso ein zugehöriges, absolutes Messsystem mit einer Ausführungsform eines hier beschriebenen Flächen-Positionscodemusters und mit einer Ausführungsform eines hier beschriebenen Flächensensors.

Ebenfalls betrifft die Erfindung ein zugehöriges Verfahren zur Absolutpositionscodierung von Oberflächen mit einem Absolutcodemuster. Diese Verfahren weist auf:

○ ein Bereitstellen eines, vorzugsweise regelmässigen, Grundrasters für Codemarken,
○ ein Bereitstellen von zwei codewortfremden Absolutcodefolgen, insbesondere aus einer einzigen, gemeinsamen Maximalfolge welche in zwei elementfremde Folgen zerlegt ist, und
○ ein Codieren der Codemarken des Grundrasters mit einem Versetzen der Codemarken gegenüber ihren Grundrasterpositionen entsprechend den Codewerten der Absolutcodefolgen.

Insbesondere kann dabei jeweils ein abwechslungsweises Anordnen der beiden Absolutcodefolgen entgegen ihrer Codefolgenrichtung erfolgen, wodurch jeweils Codezeilenpaare (oder Codezeilen-triplets, etc. bei mehr als zwei unterschiedlichen Absolutcodefolgen) entstehen. Für jedes der dabei entstehenden Codezeilenpaare kann dann jeweils in Codefolgenrichtung ein unterschiedliches Phasenverschieben der Codefolgenposition im Raster erfolgen. Dieses Phase dieses Verschiebens kann sich dabei speziell auf die Periodizität der Codefolge beziehen und daher insbesondere ein ganzzahliges vielfaches der Rasterpositionen ausmachen.

Ebenfalls betrifft die Erfindung ein zugehöriges Verfahren zur Auswertung eines hier beschriebenen Flächen-Absolutcodemusters, mit

- ◦ einem Erfassen eines Ausschnitts des Flächen-Absolutcodemusters mit einem Flächensensor und bestimmen einer Lagen von Codemarken des Flächen-Absolutcodemusters im erfassten Ausschnitt in Bezug auf den Flächensensor, insbesondere mit einem bestimmen der Lagen der Schwerpunkte der Codemarken, wobei insbesondere ein hier speziell beschriebener Flächensensor zur Schwerpunktsbestimmung zum Einsatz kommen kann,
- ◦ einem Bestimmen einer Ausrichtung eines Grundrasters des Flächen-Absolutcodemusters anhand der zuvor ermittelten Lagen der Codemarken,
- ◦ einem Auswerten einer Codierung der Codemarken entlang der zuvor bestimmten Ausrichtung,
- ◦ einem Ermitteln einer Absolutpositions-Information anhand der ausgewerteten Codierung der Codemarken,
- ◦ einem Verorten der ermittelten Absolutpositions-Information anhand der in Bezug auf den Flächensensor bestimmten Lagen jener Codemarken, welche der ermittelten Absolutpositions-Information zugrunde liegen, und
- ◦ einem Bereitstellen der Ausrichtung und/oder der absoluten Lage des Flächensensors gegenüber dem Flächen-Absolutcodemuster anhand der Verortung.

Insbesondere kann dabei das Auswerten der Codierung in mehreren, in der Ausrichtung des Grundrasters ausgerichteten Zeilen erfolgt, welche Zeilen zumindest zwei codewortfremde Absolutcodefolgen und auf dem Grundraster einen Phasenversatz zwischen den Zeilen aufweisen.

Die vorliegende Erfindung umfasst ebenso ein Computerprogrammprodukt mit Programmcode, welcher auf einem Datenträger gespeichert oder als elektromagnetische Welle (z.B. als Funksignal) bereitgestellt wird, welcher zur Ausführung eines der hier beschriebenen Verfahren auf einem Digitalrechner ausgebildet ist. Insbesondere wobei der Programmcode zur Positionsbestimmung anhand eines erfindungsgemässen Flächen-Positionscodemusters ausgebildet ist, oder wobei der Programmcode für eine Schwerpunktsbestimmung von Codemarken des Flächen-Positionscodemusters mit einem erfindungsgemässen Flächensensor ausgebildet ist. Dies gilt speziell, wenn der Programmcode in einem erfindungsgemässen absoluten Messsystem ausgeführt wird.

Ebenso umfasst die Erfindung auch ein derartiges Computerprogrammprodukt, welches zur Generierung eines erfindungsgemässen Flächen-Absolutcodes, insbesondere entsprechend der hier angeführten Methode, ausgebildet ist. Auch umfasst die Erfindung ein derartiges Computerprogrammprodukt, das für eine erfindungsgemässe Auswertung von Positions- und/oder Lageinformationen, vorzugsweise in zwei, drei oder mehr Freiheitsgraden, eines erfindungsgemässen Flächen-Absolutcodes ausgebildet ist. Auch ein Computerprogrammprodukt, welches für eine Ansteuerung und/oder Auswertung eines erfindungsgemässen Flächensensors zur Schwerpunktsbestimmung ausgebildet ist, ist Teil der Erfindung. Dieses gilt speziell, wenn die obigen Computerprogrammprodukte auf einer digitalen Recheneinheit einer 2D-Positionscodeleseeinheit oder auf einem, mit dem Flächensensor verbundenen Positionsbestimmungssystem ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1a, Fig. 1b, Fig. 1c, Fig. 1d, Fig. 1e, Fig. 1f, Fig. 1g eine erste beispielhafte Ausführungsform eines Grundrasters für ein erfindungsgemässes Flächen-Positionscodemuster, sowie ein mögliches Zustandekommen;

Fig. 2 ein Beispiel einer ersten Ausführungsform eines erfindungsgemässem Flächen-Positionscodemusters zur Erläuterung des erfindungsgemässen Aufbauprinzips;

Fig. 3 ein Beispiel der ersten Ausführungsform eines erfindungsgemässem Flächen-Positionscodemusters zur Erläuterung erfindungsgemässer Auswertungsprinzipien und Ambiguitätsauflösungen;

Fig. 4a ein Beispiel einer Ausführungsform einer Ausbildung von erfindungsgemäss vorteilhaft ausgestalteten Codemarken;

Fig. 4b ein Beispiel einer Ausführungsform einer Ausbildung von erfindungsgemäss weniger vorteilhaft ausgestalteten Codemarken;

Fig. 5a ein Beispiel einer ersten Ausführungsform einer Pixelanordnungen bei Flächensensoren;

Fig. 5b ein Beispiel einer zweiten Ausführungsform einer Pixelanordnungen bei Flächensensoren;

Fig. 5c ein Beispiel einer dritten Ausführungsform einer Pixelanordnungen bei Flächensensoren;

Fig. 5d ein Beispiel einer vierten Ausführungsform einer Pixelanordnungen bei Flächensensoren;

Fig. 6 ein Beispiel eines Ausschnitts eines typischen Signals bei einer Erfassung einer Codemarke;

Fig. 7a ein Beispiel einer Ausführungsform einer erfindungsgemässen Auswertung eines erfindungsgemässen Flächencodes mit Schwerpunktsbestimmung in separater zeilenweiser Auslesung, mit einem Beispiel einer fünften Ausführungsform einer Pixelanordnungen bei Flächensensoren;

Fig. 7b ein Beispiel einer Ausführungsform einer erfindungsgemässen Auswertung eines erfindungsgemässen Flächencodes mit Schwerpunktsbestimmung in Flächen-Auslesung, mit einem Beispiel einer sechsten Ausführungsform einer Pixelanordnungen bei Flächensensoren;

Fig. 8 eine erste beispielhafte Ausführungsform eines erfindungsgemässen Flächensensors zur Schwerpunktsbestimmung in einem vereinfachten Blockdiagramm;

Fig. 9 eine zweite beispielhafte Ausführungsform eines erfindungsgemässen Flächensensors zur Schwerpunktsbestimmung in einem schematischen Blockdiagramm mit einem Zahlenbeispiel;

Fig. 10 eine dritte beispielhafte Ausführungsform eines erfindungsgemässen Flächensensors zur Schwerpunktsbestimmung in einem schematischen Blockdiagramm;

Fig. 11 eine beispielhafte Darstellung eines vereinfachten Ablaufschemas eines erfindungsgemässen Ablaufs einer Codierung;

Fig. 12 eine beispielhafte Darstellung eines vereinfachten Ablaufschemas eines erfindungsgemässen Ablaufs einer Positionsbestimmung;

Fig. 13a eine beispielhafte Ausführungsform der Erfindung in Anwendung auf einem Messtisch oder ähnlichem;

Fig. 13b eine beispielhafte Ausführungsform der Erfindung in Anwendung bei einem Gelenk;

Fig. 13c eine beispielhafte Ausführungsform der Erfindung in Anwendung bei einem Drehgeber;

Fig. 13d eine beispielhafte Ausführungsform der Erfindung in Anwendung bei einem Lineargeber.

Die Figuren sind dabei, sofern nicht explizit angegeben, nicht als massstäblich zu betrachten. Gleiche oder funktionell ähnliche Merkmale sind, insoweit praktikabel, durchgängig mit denselben Bezugszeichen versehen und werden gegebenenfalls mit einem Kleinbuchstaben als Index unterschieden.

Zum leichteren Verständnis werden viele der folgenden Ausführungen an einer beispielhaften Ausführungsform eines erfindungsgemässen Flächenpositionscodes sowie einer damit verbundenen Ausführungsform eines erfindungsgemässen Flächensensors zur Schwerpunktsbestimmung erläutert. Das erfindungsgemässe Prinzip kann in anderen Ausführungsformen aber beispielsweise auch in anderen Variationen des zugrunde liegenden erfindungsgemässen Prinzips, beispielsweise mit anderen bekannten Codierungen der Codemarken, in analoger Weise implementiert werden. Insbesondere stellen unterschiedliche Kombinationen der hier, beispielhaft in einer oder in mehreren der unterschiedlichen Ausführungsformen illustrierten Aspekte, ebenfalls erfindungsgemässe Ausführungsformen dar.

Bei dem erfindungsgemässen absoluten Flächencode handelt es sich um eine, vorzugsweise - aber nicht zwingend - sich nach einem regelmässigen, - aber zumindest bekannten - Raster einer Anordnung von Codemarken auf einer zu codierenden Fläche. Bei der hier beschriebenen 2D-Codierung werden als Codefolgen erfindungsgemäss codewortfremde Folgen eingesetzt, insbesondere binäre Folgen, welche jeweils periodisch wiederholt werden. Die Wiederholung erfolgt vorzugsweise periodisch mit der primären Periode der Folge. Beispiele solcher codewortfremden Folgen mit einer primären Periode sind etwa Maximalfolgen (Maximum Length Sequence, MLS), welche in bekannter Weise nach Bildungsgesetzen von verschiedensten Graden erstellt und/oder ausgewertet werden können. Weitere Beispiele solcher oder ähnlicher codewortfremder Folgen sind etwa auch in CH 704584 beschrieben. Es können optional auch Pseudo-Random-Codes (PRC) oder andere, z.B. empirisch ermittelte Codes, welche zur Absolutcodierung geeignet sind, also insbesondere besagte Eigenschaft der Codewortfremdheit eines hinreichend langen Codeworts der binären Folge aufweisen, verwendet werden. Wie beispielsweise in EP 0 268 558 erwähnt, kann dazu neben der Nutzung zweier unterschiedlicher Codierungen, welche bezüglich der betrachteten Codewortlänge gegeneinander Codewortfremd sind, beispielsweise auch eine Maximalfolge mit einem gemeinsamen Bildungsgesetz verwendet werden, welche Maximalfolge in zwei Teil-Folgen aufgeteilt wird - womit sich beispielsweise die Auswertung vereinfachen lässt.

Entsprechend eines weiter unten nochmals im Detail behandelten Aspekts der Erfindung können bei einem erfindungsgemässen Flächencode die Position der Codemarken anhand ihrer Schwerpunktslagen bestimmt werden, speziell mit Hilfe von Volumenschwerpunkten (da eine Integration der vom Flächensensor ausgelesenen Intensitätswerte einer flächigen Codemarke ein Volumen darstellt).

Es wird dabei also ein Muster von Codemarken mit Hilfe eines Flächensensors erfasst. Die Codemarken können dabei auf Basis der unterschiedlichsten physikalischen Prinzipien erfasst und ausgewertet werden, beispielsweise

 o optisch, etwa in Form von Markierungen mit unterschiedlichen optischen Transmissions- und/oder Reflexionsgraden, Beugungseigenschaften, Spektraleigenschaften oder dergleichen,
 o kapazitiv, etwa in Form von Markierungen mit unterschiedlichen elektrischen Permeabilitäten, Leitfähigkeiten und/oder Abständen, Flächen oder dergleichen,
 o magnetisch, etwa in Form Markierungen mit unterschiedlichen Suzeptibilitäten, Magnetisierungen, Abständen, Flächen oder dergleichen.

Bei der Erfassung kommt dabei ein Flächensensor mit einer Matrix von mehreren sensitiven Punkten oder Flächen, sogenannte Pixel, zum Einsatz. In den weiteren Ausführungen wird beispielhaft speziell auf eine Ausführungsform eines optischen Flächensensors eingegangen, was jedoch keine Einschränkung für die erfindungsgemässe Flächencodierung darstellt, da diese auch mit anderen Flächensensoren auswertbar ist (wenn auch allenfalls mit einem höheren Auswerteaufwand und/oder entsprechend langsamer).

Das Codemuster besteht beispielsweise aus mehreren Codemarken in Form von Flächen wie z.B. Kreisflächen oder anderen Formen, deren Schwerpunktspositionen beispielsweise in einer Tabelle hinterlegt sein können. Sobald die jeweilige Codemarken-Fläche identifiziert ist, kann mit Hilfe dieser Tabelle die Position der Fläche bestimmt werden. Zur Identifikation der jeweiligen Codemarken-Fläche werden diese entsprechend einer Absolutcodefolge absolut codiert. Zur Codierung sind die Flächenschwerpunkte leicht versetzt auf einem Raster oder Gitter angeordnet, insbesondere derart dass dieser Versatz im Rahmen der Fertigungstoleranzen ermittelbar ist. Als Gitterstruktur bietet sich neben einem kartesischen Gitter speziell auch die dichteste Packung an - im Fall einer ebenen Flächencodierung also eine hexagonale Wabenstruktur.

Für eine Codierung auf einer Freiformfläche oder einer Kugelfläche ist eine dichteste Packung schwieriger zu berechnen. Eine gute Näherung erhält man z.B. mit Hilfe von gleichmässigen Maschen, die etwa mit Hilfe von Softwaretools wie z.B. "DistMesh" von Per-Olof Persson von der Berkeley Universität in Kalifornien, oder mit anderer Software mit ähnlichen Funktionalitäten berechnet werden können. Alternativ kann in einer einfachen Ausführungsform z.B. auch das Gitter von der Struktur von Fullerenen verwendet werden - welches auf einer Kugel dem klassischen Fussballmuster entspricht. Um ein beispielsweise ein derartiges Fullerenen-Muster auf einer Kugeloberfläche zu verfeinern, kann in einem ersten Schritt in jedem 5- und 6-Eck ein auf die Kugeloberfläche projizierter Schwerpunkt mit den jeweiligen Eckpunkten verbunden werden. Werden noch mehr Punkte benötigt, kann sukzessive jeder auf die Kugeloberfläche projizierte Schwerpunkt der jeweiligen Dreiecke mit den zugehörigen Eckpunkten verbunden werden.

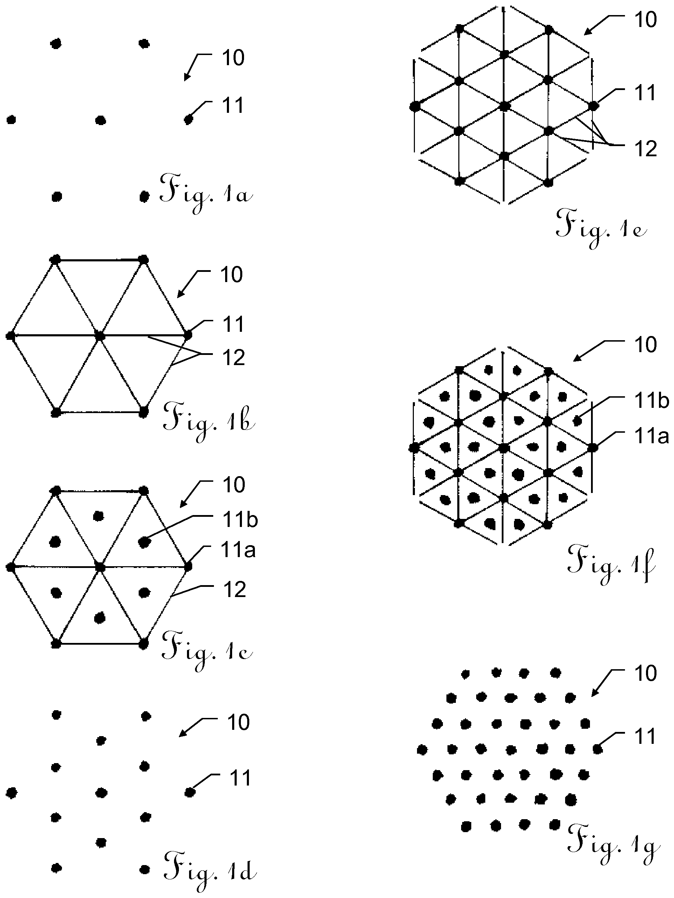

Fig. 1a bis Fig. 1g zeigen beispielhaft eine Verfeinerung eines Gittermusters anhand eines planaren Sechsecks. Ein analoges Vorgehen kann wie beschrieben auch auf eine gekrümmte Freiform- oder Kugelfläche angewandt werden.

Im speziellen zeigt:

 ◦ Fig. 1a ist ein Basis-Sechseck des Codemuster-Grundrasters 10 von Codemarken 11 mit einem zusätzlichen eingeführten Codemarken-Punkt 11 in seinem Zentrum gezeigt. Bei der Bestimmung des Zentrums kann beispielsweise ein Schwerpunkt, Inkreismittelpunkt, Umkreismittelpunkt, etc. verwendet werden.
 ◦ In Fig. 1b sind im Raster 10 aus Fig. 1a die jeweils benachbarten Punkte 11 verbunden, sodass das gezeigte Dreiecksmuster 12 entsteht.
 ◦ In Fig. 1c sind in diesen Dreiecken 12 jeweils die Zentren 11b wie z.B. Schwerpunkte, In- oder Umkreismittelpunkte, etc. eingezeichnet.
 ◦ In Fig. 1d ist das entstandene, feinere Grundraster 10 von Codemarken 11 aus Fig. 1c ohne die störenden Linien 12 gezeigt.

∘ In Fig. 1e sind erneut die jeweils benachbarten Punkte mit einer Linie 12 verbunden.

∘ Wie zuvor, werden in Fig. **1f** zusätzliche Codemarken 11b in jedem der Schwerpunkten der jeweils mit den Codemarken 11a entstehenden Dreiecke eingezeichnet.

∘ Das dabei ohne die störenden Linien gezeigte, weiter verfeinerte Codemuster 10 von Codemarken 11 ist in Fig. **1g** gezeigt.

o Obiger Prozess kann beliebig oft weitergeführt werden, bis ein für die entsprechende Anwendung hinreichend feines Grundraster 10 eines Codemusters erzielt wird.

Entsprechend der vorliegenden Erfindung wird das Grundraster, welches beispielsweise wie oben erläutert - oder aber auch auf andere Weise - zustande gekommen sein kann, mit einer Codierung entsprechend der Erfindung versehen und auf der zu codierenden Fläche aufgebracht. Erfindungsgemäss genügt dabei ein verhältnismässig kleiner Sensor, um auf einer, im Vergleich zu diesem Sensor relativ grossen, mit dem erfindungsgemässen zweidimensionalen Absolutpositionscode codierten Fläche die Absolutposition des Sensors in zwei Dimensionen zu bestimmen und vorzugsweise auch dessen Ausrichtung auf der Fläche zu bestimmen.

Als Beispiel gibt die folgende Tabelle einen Überblick, wie stark die erfindungsgemäss codierbare Fläche mit der Codewortlänge ansteigt. In diesem Beispiel ist der Grund-Abstand zweier Schwerpunkte des Grundrasters beispielhaft mit 250 µm angenommen. Es können aber auch beliebige grössere oder kleinere Grundrasterabstände angewandt werden. Diese Grundrasterabstände wirken sich dabei nicht primär auf die erzielbare Positionsgenauigkeit aus, da diese vielmehr von der erzielbaren Genauigkeit der Schwerpunktspositionsbestimmung durch den Flächensensor beeinflusst werden.

Zur Auswertung des erfindungsgemässen 2D-Codes werden in Spaltenrichtung immer mindestens drei Zeilenpaare benötigt. In praktischen Anwendungen empfiehlt es sich als Marge zumindest noch zwei Zeilen hinzuzufügen. Daraus ergibt sich die minimale Sensorgrösse zu

$$250 \; \mu m \times 5 \times Quadratwurzel(3) = 2.2 \; mm,$$

wobei die $\sqrt{3}$ sich durch den vertikalen Abstand des in diesem Beispiel angenommen, hexagonalen Grundrasters ergibt. Wenn in vorteilhafter Weise auch Verdrehungen des Flächensensors gegenüber dem Grundraster bestimmt werden können sollen, muss die kürzere Seite des Sensors also mindestens 2.2 mm lang sein. In Zeilenrichtung kann für obiges Beispiel aus folgender Tabelle die maximal absolut codierbare Fläche in Abhängigkeit der Sensorlänge abgelesen werden:

| Sensorlänge | Codewortlänge | Codelänge | Absolutcodierte Breite | Absolutcodierte Höhe |
|---|---|---|---|---|
| $5 \times 250 \; \mu m = 1.25 \; mm$ | 3 | $3 \times 4 = 12$ | $12 \times 250 \; \mu m = 3 \; mm$ | $3 \; mm \times \sqrt{3} = 5.2 \; mm$ |
| $6 \times 250 \; \mu m = 1.50 \; mm$ | 4 | $7 \times 8 = 56$ | 14 mm | 24.25 mm |
| $7 \times 250 \; \mu m = 1.75 \; mm$ | 5 | $15 \times 16 = 240$ | 60 mm | 103.9 mm |
| $8 \times 250 \; \mu m = 2.00 \; mm$ | 6 | $31 \times 32 = 992$ | 248 mm | 429.5 mm |
| $9 \times 250 \; \mu m = 2.25 \; mm$ | 7 | $63 \times 64 = 4032$ | 1 m | 1.7 m |
| $10 \times 250 \; \mu m = 2.50 \; mm$ | 8 | $127 \times 128 = 16256$ | 4 m | 7 m |
| $11 \times 250 \; \mu m = 2.75 \; mm$ | 9 | $255 \times 256 = 65280$ | 16.3 m | 28.2 m |
| $12 \times 250 \; \mu m = 3.00 \; mm$ | 10 | $511 \times 512 = 261632$ | 65.4 m | 113 m |

Der erfindungsgemässe Absolutcode ist folglich gut für die jeweilige Anwendung skalierbar, es kann also je nach Grösse der zu codierenden Fläche, die Codegrösse entsprechend gewählt werden. Allenfalls kann zudem auch noch der hier beispielhaft angenommene Grundraster-Abstand variiert werden. In gezeigtem Beispiel kann etwa mit der Erfassung eines 3×3 mm grossen Ausschnitts des Absolutcodes, bereits eine Fläche von 65x113 m absolut positions- und/oder ausrichtungscodiert werden. In einer speziellen Ausführungsform kann mit dem erfindungsgemässen Absolutcode und entsprechender Auswertung eine Bestimmung von sechs Freiheitsgraden realisiert werden, wovon zumindest drei Freiheitsgrade in hoher Genauigkeit gemessen werden können und die verbleibenden drei zumindest mit vergleichsweise geringerer Auflösung und Messbereich erfasst werden können - was in einer Vielzahl von Anwendungen, insbesondere im Hinblick auf Fehlererkennung, hinreichend ist.

Als Beispiel für eine erfindungsgemässe Codierung wird im Folgenden ein 2D-Code aus dem Generatorpolynom $x^3 + x^2 + 1$ vorgestellt, es können jedoch auch ein Vielzahl von anderen Generatorpolynomen von grösserem oder kleinerem Grad oder auch andere Absolutcodefolgen angewandt werden - wie beispielsweise die in CH 704584 beschrieben. Die zu obigem Polynom aus diesem Beispiel gehörige Maximalfolge ist 0100111...,
und entsteht aus der Potenzfolge der Nullstellen a, mit

$$\alpha^0 \bmod x^3 + x^2 + 1 = 1$$

$$\alpha^1 \bmod x^3 + x^2 + 1 = \alpha$$

$$\alpha^2 \bmod x^3 + x^2 + 1 = \alpha^2$$

$$\alpha^3 \bmod x^3 + x^2 + 1 = \alpha^2 + 1$$

$$\alpha^4 \bmod x^3 + x^2 + 1 = \alpha^2 + \alpha + 1$$

$$\alpha^5 \bmod x^3 + x^2 + 1 = \alpha + 1$$

$$\alpha^6 \bmod x^3 + x^2 + 1 = \alpha^2 + \alpha$$

$$\alpha^7 \bmod x^3 + x^2 + 1 = 1 \ .$$

Die im Beispiel gezeigte Potenzfolge hat folglich sieben unterschiedliche Elemente, und die Koeffizienten von $\alpha$ entsprechen genau der oben genannten Folge 0100111....

Wie z.B. in EP 0 368 605 im Detail erläutert, kann jede Maximalfolge in zwei Folgen der halben Länge (einmal auf- und einmal abgerundet) zerlegt werden. Diese Eigenschaft kann in der vorliegenden Erfindung genutzt werden, um zwei codewortfremde Folgen zu erhalten, welche voneinander einfach unterschieden werden können und welche in Kombination eine längere Absolutcodierung ergeben. In einer Ausführungsform der Auswertung kann dabei die Tatsache vorteilhaft genutzt werden, dass dabei beiden Absolutcodefolgen dasselbe Generatorpolynom zugrunde liegt.

In obigem Beispiel kann die beispielhafte Absolutcodefolge z.B. in folgende beiden Teilfolgen zerlegt werden:

010... sowie

0111... .

Die Folge 010... enthält dabei die Codeworte 1, 2, 4. Das erkennt man, indem immer drei Bits zusammengefasst werden. Damit wird aus der binären Folge 01001... in dezimaler Darstellung 241....

Die Folge 0111... enthält dabei die Codeworte 3, 5, 6, 7. Das erkennt man ebenfalls, indem immer drei Bits zusammengefasst werden. Damit wird aus der binären Folge 011101... in dezimaler Darstellung 3765...

Codeworte aus den jeweiligen Absolutcodefolgen können somit eindeutig einer der beiden Teilfolgen zugeordnet werden.

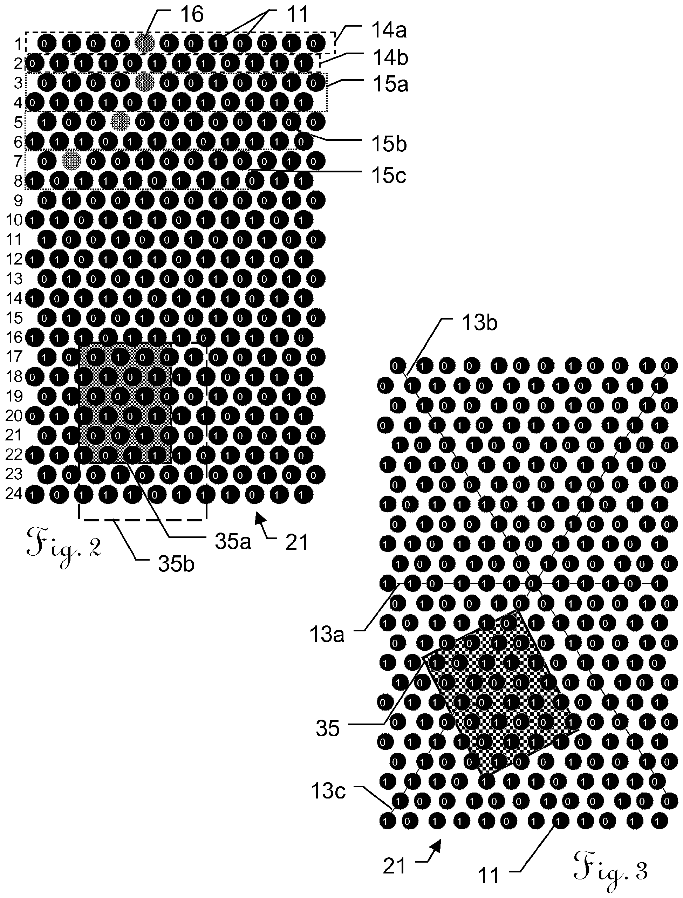

Mit derartigen Teilfolgen kann eine Ausführungsform einer erfindungsgemässen 2D-Flächen-Absolutpositionscodierung wie in dem in **Fig. 2** gezeigten Beispiel bereitgestellt werden. Die Zahlen in den schwarzen Kreisflächen 11 sind im eigentlichen Code nicht vorhanden, sondern sollen lediglich verdeutlichen welcher Bitwert der jeweiligen Codemarke 11 bei der Decodierung zugeordnet wird - was in dieser Figur ansonsten mit freiem Auge nicht immer klar ersichtlich wäre. Auf eine bevorzugte Ausführungsform der Darstellung der Codewerte entsprechend der Erfindung wird im Folgenden - insbesondere im Bezug auf Fig. 3 - nochmals im Detail eingegangen.

Die Figur 2 zeigt beispielhaft einen Flächenbereich, welcher maximal mit der zuvor beispielhaft erläuterten, zerlegten Folge der Länge Sieben absolut codiert werden kann. Die binäre Codierung mit '0' und '1' kann dabei z.B. wie in der Figur gezeigt ausgebildet sein, es lassen sich in analoger Weise nach dem erfindungsgemässen Prinzip auch andere Anordnungen Ausbilden, insbesondere indem z.B. die jeweiligen Startwerte anders gewählt werden. Wie zuvor in Bezug auf die Absolutcodefolgen bereits erläutert, sind die Codeworte zur Dekodierung in diesem Beispiel jeweils drei Bit lang. Der Flächensensor 35a muss in diesem Beispiel daher zur Decodierung zumindest drei Codemarken in Zeilenrichtung erfassen, und zumindest sechs Zeilen orthogonal dazu. Vorzugsweise wird der Sensor 35b jedoch in beide Richtungen um einen Marge grösser ausgebildet, z.B. wie in der Figur gezeigt.

In den Zeilen 1, 3, 5, ... (z.B. also in der mit Umrahmten, mit 14a bezeichneten Zeile) findet man jeweils die erste der in obigem Beispiel erläuterten Teilfolgen, welchen in Zeilenrichtung vier mal hintereinander angeordnet ist. Im gegebenen Beispiel stellt dieses die maximale Anzahl dar, bei welcher mit Hilfe der zweiten Teilfolge eine absolute Positionscodierung in Zeilenrichtung möglich ist. Allgemein ergibt sich die in einer derartigen Ausführungsform die maximale Anzahl als kleinstes gemeinsames Vielfaches der Folgenlängen.

In den Zeilen 2, 4, 6, ... (z.B. also in der mit Umrahmten, mit 14b bezeichneten Zeile) findet man die zweite der obigen Teilfolgen, in der Zeile jeweils dreimal hintereinander. Dieses ist ebenfalls die maximale Anzahl, bei der mit Hilfe der ersten Teilfolge eine absolute Positionscodierung in Zeilenrichtung möglich ist. Mit einem derartigen Codemuster kann die Position in der Waagrechten Zeilenrichtung absolut decodiert werden. Dazu wird ein für die verwendete Absolutcodefolge zumindest hinreichend langes Codewort, also eine hinreichend lange Folge von Codemarken mittels des Flächensensors erfasst und deren Codewerte bestimmt. Für das somit ermittelte Codewort lassen zum einen die Zugehörigkeit zu einer der Teilfolgen und zum anderen auch die Position des erfassten Codeworts innerhalb der Teilfolge eindeutig bestimmen. Bei der Positionsbestimmung wird auch die Position der erfassen Codemarken in Bezug auf den Flächensensor in dessen Pixelkoordinaten (bzw. Sub-Pixelkoordinaten) berücksichtigt. Somit ist in der Waagrechten, also in Zeilen- bzw. CodeRichtung eine absolute Position des Flächensensors gegenüber dem Codemuster ermittelbar.

In der Senkrechten, also orthogonal zu obigen Zeilen ist die Position durch jeweilige Verschiebungen der Teilfolgen in Zeilenrichtung codiert, welche auch als Phasenverschiebung bezüglich der Grundperiode der Teilfolge bezeichnet werden. Im gezeigten Beispiel ist zwischen Zeile 1 (mit Nr. 14a+15b) und Zeile 3 (mit Nr. 15a) die Phasenverschiebung der ersten Teilfolge gleich Null, zwischen Zeile 3 (mit Nr. 15a) und Zeile 5 (mit Nr. 15b) gleich 1 und zwischen Zeile 5 (mit Nr. 15b) und Zeile 7 (mit Nr. 15c) gleich 2, und so weiter. Dies ist in der Figur anhand einer Markierung 16 einer der Codemarken durch eine spezielle Schraffur ersichtlich gemacht - für die vorliegende Erfindung ist eine optische Andersartigkeit von einer oder mehreren Codemarken jedoch nicht erforderlich, da für die Auswertung die Phasenverschiebung anhand des gelesenen Codeworts ersichtlich ist.

Im gezeigten Beispiel steigt die Phasenerhöhung also mit jedem Zeilenpaar 15a, 15b, 15c,... um eins an. Das hat den Vorteil, dass die Phasendifferenz direkt das Zeilenpaar codiert. Diese Phasendifferenzen wiederholen sich für die erste Teilfolge viermal in der Senkrechten. Für die zweite Teilfolge wiederholen sich die Phasendifferenzen 0, 1, 2 und 3 dreimal in der Senkrechten. Anhand dieser Phasenverschiebungen ist die Position in der Senkrechten absolut decodierbar, und es ergibt sich in diesem Beispiel der Eindeutigkeitsbereich in der Senkrechten zu 3x4=12 Zeilenpaaren. Bei der Positionsbestimmung wird dabei wiederum auch die Position der erfassten Codemarken in Bezug auf den Flächensensor 35a,35b in dessen Pixelkoordinaten berücksichtigt.

In der gezeigten, beispielhaften Ausführungsform in Fig. 3 sind die hier exemplarisch als Vollkreise ausgebildeten Codemarken 11, für einen Bitwert '0' um einen Bruchteil der Grundperiode, insbesondere um weniger als die Hälfte, vorzugsweise um weniger als ein Viertel oder noch weniger, nach links verschoben. Die Kreise 11 für den Bitwert '1' sind bezüglich des Grundrasters entsprechend nach rechts verschoben. Diese Ausführungsform ermöglicht in einfacher Weise, dass zusätzlich zur oben erläuterten Positionsinformation eine Verdrehung zwischen Bildsensor 35 und 2D-Codemuster ermittelbar ist.

In der Figur sind drei Linien 13a,13b,13c eingezeichnet. Diese markieren die Symmetrieachsen des Codemusters bezüglich einer Verdrehung. Werden diese drei Ausgleichsgeraden auf Basis der Schwerpunkte der Kreisflächen 11 berechnet, so haben die Schwerpunkte der Kreisflächen 11 auf der waagrechten Linie entlang einer Zeile die geringste Abweichung zur Ausgleichsgeraden 13a. Bei den schrägen Linien 13b,13c ist die Abweichung höher, da die Kreisflächen 11 dort aufgrund der Codierung nicht exakt entlang der Linie verlaufen, sondern in einem Winkel dazu verschoben sind.

Zur Veranschaulichung des erfindungsgemässen Prinzips werden im Folgenden die in obigem Bild eingezeichneten drei Geraden 13a,13b,13c betrachtet. Um das Beispiel einfach zu halten werden allfällige Positionierungs- und Messungenauigkeiten vernachlässigt. Da der Bildsensor 35 zur oben bereits beschriebenen Absolutpositionsbestimmung nicht mehr als vier Schwerpunkte in Zeilenrichtung aufzunehmen braucht, werden im Beispiel auch nur die ersten vier Schwerpunkte betrachtet. Im Beispiel ist der Punktabstand im unverschobenen Raster mit einem Wert von zwei angenommen, die Verschiebung entsprechend der Bitwerte beträgt ein Zehntel. Diese Annahmen sind rein beispielhaft gewählt und prinzipiell nicht einschränkend, können also in anderen Ausführungsformen auch anders gewählt werden. Bei der Wahl der Abstände und Verschiebung sollte lediglich auf eine hinreichende Erkennbarkeit und eindeutige Unterscheidbarkeit in der gegebenen Kombination aus Sensor 35 und Code-muster geachtet werden, welche mathematisch und/oder empirisch ermittelt werden kann.

Betrachtet man in einem ersten Beispiel die Linie 13b von links oben nach rechts unten, so ergeben sich in diesem Beispiel folgende Schwerpunktspositionen der auf dieser Linie liegenden Codemarken:

(-0.1, 0) (1.1, -1.732) (2.1, -3.464) (3.1, -5.196).

Aus diesen Schwerpunktspositionen lässt sich in bekannter Weise (z.B. mit einem Algorithmus ähnlich jenem der Funktion 'polyfit' der Mathematiksoftware "Matlab") eine Regressionsgerade bestimmen, in gegebenem Beispiel mit:

$$y = -1.63 \cdot x - 0.0708,$$

wobei sich die dabei ebenfalls ermittelbare Norm der Residuen zu

normr = 0.179

ergibt.

Aufgrund der verhältnismässig hohen Norm der Residuen lässt sich erkennen, dass diese Gerade keine Codierung enthält.

Betrachtet man in einem zweiten Beispiel die Gerade 13a in der Mitte von links nach rechts, so ergeben sich die Schwerpunktspositionen zu:

(0.1, 0) (2.1, 0) (3.9, 0) (6.1, 0).

Die zugehörige Regressionsgerade ergibt sich dabei zu

Y = 0,

und die Norm der Residuen zu

normr = 0.

Aus der niedrigen Norm der Residuen lässt sich darauf schliessen, dass diese Gerade eine Codierung enthalten könnte. Betrachtet man in gleicher Weise weitere Geraden welche zu der potentiell codierten parallel sind, und ergeben sich bei diesen ebenso kleine Normen, so bestätigt sich obiger Schluss, dass es sich in dieser Richtung um codierte Geraden handelt, da in anderen Richtungen die Normen von parallelen Geraden im allgemeinen abweichen würde.

Betrachtet man in einem dritten Beispiel die Gerade 13c von links unten nach rechts oben, so ergeben sich die Schwerpunktspositionen zu:

(0.1, 0) (1.1, 1.732) (2.1, 3.464) (3.1, 5.196).

Die Regressionsgerade berechnet sich dabei zu

$$y = -1.73 \cdot x - 0.173,$$

und die Norm der Residuen zu

normr = 0.

Aus der niedrigen Norm der Residuen liesse sich schliessen, dass diese Gerade eine Codierung enthalten könnte. Da jedoch alle Schwerpunkte den gleichen Abstand voneinander haben, wäre die daraus resultierende Codierung falsch (also ein Wert der nicht in den Absolutfolgen vorkommt), und somit kann es sich nicht um ein Coderichtung handeln. Auch wenn - wie bereits in Beispiel weiter oben erläutert - benachbarte Geraden betrachte werden, ergibt sich, dass diese eine zu grosse Norm der Residuen haben. Diese Geraden sind folglich nicht codiert. Bei der Berechnung der Ausgleichsgeraden werden in einer vorteilhaften Ausgestaltung alle parallelen Geraden gleichzeitig geschätzt, wodurch die Genauigkeit der Schätzung für die jeweiligen Geraden weiter erhöht werden kann.

Ist die Coderichtung gefunden, so können Codeworte in den erfassten Ausschnitten des Codemusters ausgewertet werden und daraus eine Absolutpositionsinformation des Flächensensors 35 gegenüber dem Codemuster bestimmt werden. Aus dieser Absolutposition der erfassten Codewörter kann anhand der Positionen der Codemarken, welche diese Codewörter bilden, insbesondere anhand der Positionen der Schwerpunkte der Codemarken, eine hochauflösende Positionsinformation des Flächensensors 35 gegenüber dem Codemuster bestimmt werden, insbesondere mit hoher Positionsgenauigkeit bis hin zu einer Sub-Pixel Auflösung des Flächensensors, also mit einen fraktionalen Anteil. Die Coderichtung kann zudem auch für eine Bestimmung der Winkel-Ausrichtung des Flächensensors 35 in Bezug auf das Codemuster genutzt werden. In dem oben gezeigten Beispiel kann bei der Ausrichtungsbestimmung jedoch eine Unsicherheit der Verdrehung um 180 Grad verbleiben. Diese Unsicherheit kann Beispielsweise durch die Betrachtung einer dritten Code-Zeile gelöst werden. Ist der Flächensensor 35 nicht um 180° verdreht, so ist die Phasenverschiebung zwischen Zeile 2 und 3 um eins höher als zwischen Zeile 1 und 2, bei einer 180° Verdrehung wäre dies entsprechend umgekehrt.

Das folgende Beispiel verdeutlicht obige Zusammenhänge nochmals. Betrachtet werden wiederum die Schwerpunktspositionen der Kreisflächen 11 aus Fig. 3. Wird der Ursprung des Koordinatensystems im Schnittpunkt der drei Geraden 13a,13b,13c gewählt, und wählt man den Abstand benachbarter Gitterpunkte in einer Zeile beispielhaft zu 1, so erhält man Gitterpunkte für die Zeilen 1, 3, 5, ... an Positionen

$$( k_x - \frac{11}{2} , \quad (\frac{11}{2} - k_y)\sqrt{3} )$$

$k_x = 0,1,...,11$ ; $k_y = 0,1,...,11$ , und für die Zeilen 2, 4, 6, ... an Positionen

$$( m_x - 6 , \quad (5 - m_y)\sqrt{3} )$$

$m_x = 0,1,...,11$ ; $m_y = 0,1,...,11$.

Je nachdem, ob die zugehörige Kreisfläche 11 der Codemarke mit Bit '0' oder Bit '1' codiert ist, wird diese Positionen um ein Delta in der Zeile nach links bzw. rechts verschoben. Die Schwerpunktspositionen liegen folglich an den Positionen:

$$( k_x - \frac{11}{2} + \Delta f_1(k_x,k_y) , \quad (\frac{11}{2} - k_y)\sqrt{3} )$$

$k_x = 0,1,...,11$ ; $k_y = 0,1,...,11$

$$( m_x - \frac{11}{2} + \Delta f_2(m_x,m_y) , \quad (5 - m_y)\sqrt{3} )$$

$m_x = 0,1,...,11$ ; $m_y = 0,1,...,11$

Dabei enthält $\Delta$ die Verschiebungslänge für die Bitcodierung und $f_1(k_x,k_y)$ bzw. $f_2(m_x,m_y)$ enthalten die jeweiligen Codierungsfolgen. In diesen Codierungsfolgen wird ein Bit-Wert '0' als Wert -1 und ein Bit-Wert '1' als Wert 1 abgebildet. Formal ausgedrückt ergibt dies:

$$f_1(k_x,k_y) = f_1,0(\frac{k_x^2 - k_x}{2} + k_y)$$

wobei

$$f_1,0(x) = \begin{cases} -1 & x \bmod 3 = 0 \\ 1 & x \bmod 3 = 1 \\ -1 & x \bmod 3 = 2 \end{cases}$$

und

$$f_2(m_x,m_y) = f_2,0(\frac{m_x^2 - m_x}{2} + m_y)$$

wobei

$$f_2,0(x) = \begin{cases} -1 & x \bmod 4 = 0 \\ 1 & x \bmod 4 = 1 \\ 1 & x \bmod 4 = 2 \\ 1 & x \bmod 4 = 3 \end{cases} .$$

Obiges Beispiel zeigte exemplarisch eine erfindungsgemässe Absolutcodierung auf einer im wesentlichen planen Fläche als Codeträger, wie beispielsweise einen Messtisch, auf welchem Messgeräte oder Werkzeuge ihre Position und Orientierung bezüglich des Messtisches erfassen können. Die Oberfläche eines Zylinders kann ebenfalls mit einem Absolutcode wie oben beschrieben versehen werden, in dem die ebene Fläche zu einem Zylinder gebogen wird. Damit kann erfindungsgemäss beispielsweise auch eine Positions- und/oder Ausrichtungsbestimmung einer Achse, Walze oder dergleichen in zwei oder mehr Freiheitsgraden erfolgen.

Wird erfindungsgemäss ein Torus, eine Sphäre, oder auch eine Freiformfläche mit einer zweidimensionalen Codierung versehen, kann diese jedoch in vielen Fällen nicht auf einem gleichförmigen Gitter basieren. Neben oben genannten, speziellen Mustern für Grundrastern können in einer speziellen Ausführungsform stattdessen die Gitterpunkte auch in bekannter Weise pseudozufällig verteilt sein. In vorteilhafter Weise weist die Verteilung der Gitterpunkte dabei ein möglichst kleines Autokorrelations-Nebenmaximum auf. Beispielsweise kann mit oben genannter Software "DistMesh" ein geeignetes pseudozufälliges Codierungsmuster entwickelt werden, wobei im Fall einer schlechten Autokorrelationseigenschaft die Anzahl der Punkte leicht verändert werden kann, um damit in mehreren Iterationsschritten bessere Autokorrelationseigenschaften zu erhalten. Insbesondere bei einer derartigen, speziellen Ausführungsform mit pseudozufälligem Grundmuster, kann beispielsweise die Dekodierung mit Hilfe einer Histogramm-Betrachtung aus allen gemessenen Schwerpunkten mit allen in einer Tabelle hinterlegten Schwerpunkten durchgeführt werden. Bei der korrekten Dekodierung ergibt sich dabei ein Maximum dieses Histogramms. Für das Histogramm können z.B. alle gemessenen Schwerpunktspositionen mit allen hinterlegten Schwerpunktspositionen subtrahiert werden und daraus das Histogramm gebildet werden.

Im Sinne der oben erläuterten 2D-Flächenpositionscodeauswertung gilt es entsprechend eines Teilaspekts der vorliegenden Erfindung einen Matrix- oder Flächensensor 35 für Volumenschwerpunktsberechnung bereitzustellen, mit dessen Hilfe Positionen bestimmt werden können. Dabei kann zum einen ein klassischer Halbleiter-Bildsensors, wie ein standard CCD- oder CMOS-Chip genutzt werden, bei welchem jede Zeile Pixelweise ausgelesen wird, jeder der erhaltenen Pixelwerte digitalisiert wird, und die digitalisierten Werte im Anschluss numerisch verarbeitet werden um die Schwerpunktslagen der Codemarken zu bestimmen, beispielsweise mittels eines Bildverarbeitungsalgorithmus.

Um schnelle Messzeiten zu ermöglichen, kann zum anderen, entsprechend eines speziellen Aspekts der vorliegenden Erfindung, für eine Auswertung eines erfindungsgemässen Flächen-Positionscodes der jeweilige Schwerpunkt der Codemarken 11 zumindest teilweise direkt in Hardware berechnet werden, insbesondere können dabei zeitkritische Teilberechnungen der Schwerpunktsauswertung nicht nur auf digitalisierten, numerischen Werten für jedes der Pixel sondern für elektrisch analoge Pixelwerte erfolgen. Dabei können z.B. insbesondere bei der Integration die Pixel-Werte analog addiert werden und die erst die entstehende Summe mit Hilfe eines Analog-Digital-Wandlers gewandelt werden. Insbesondere kann dabei auch ein verhältnismässig langsamer und entsprechend preisgünstigerer Analog-Digital-Wandler zum Einsatz kommen, da z.B. keine schnelle Digitalisierung jedes einzelnen Pixels erforderlich ist, sondern nur jeweils der integrierte Summenwert von mehreren Pixeln digitalisiert werden muss - und diese Digitalisierung zudem so lange dauern kann, bis eine analoge Summe der nächsten Codemarke gebildet wurde, welche im Allgemeinen aus mehren Einzelpixelwerten besteht und zudem durch einen Abstand von mehreren Pixeln mit Pixelwerten unterhalb der Sumpfschwelle getrennt ist. Eine langsamere Signalverarbeitung kann auch mit geringerer spektraler Bandbreite durchgeführt werden, womit mehr Rauschen ausgefiltert und das SNR verbessert werden kann. Auch die Indices, bei welchen die Pixelwerte einen (Sumpf-)Schwellwert unter- oder überschreiten kann mit einem digitalen Zähler oder einem analogen Komparator ermittelt werden.

Im Lichte obiger Ansätze kann z.B. der Flächenbedarf für die Schaltung auf dem Elektronik-Chip des Sensors klein gehalten werden, ein geringerer Stromverbrauch erzielt werden. Insbesondere kann aber auch eine höhere Ausleserate erreicht werden, als dieses etwa bei Nutzung eines herkömmlichen CCD-Chip mit pixelweise digitalisierter Auslesung möglich ist.

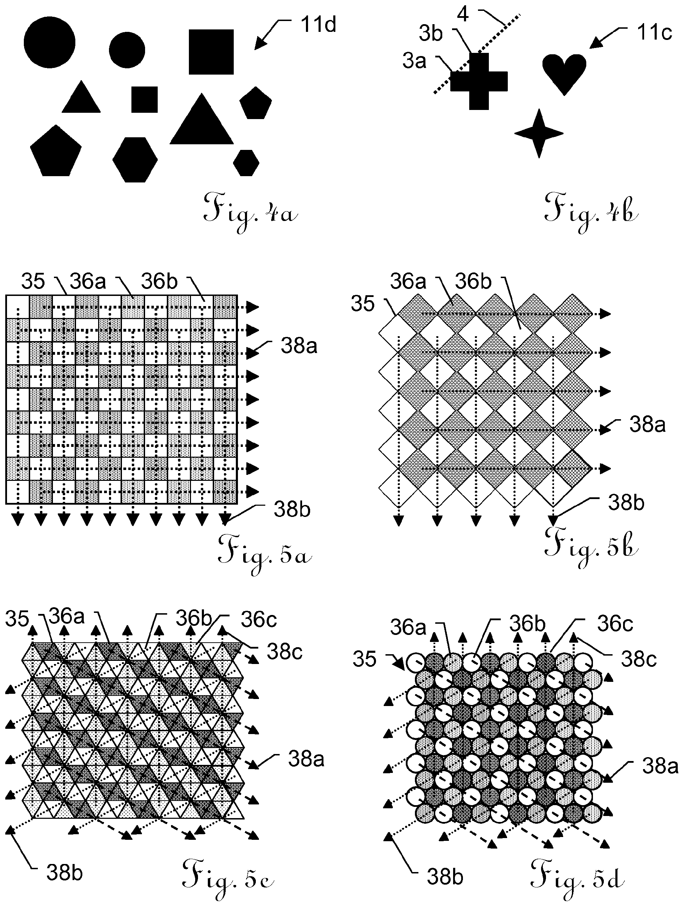

**Fig. 4a** zeigt einige exemplarische Beispiele möglicher Musterelemente 11d, die - insbesondere mit einem erfindungsgemässen Flächensensor 35 - sich vorteilhaft für eine erfindungsgemässe Bestimmung eines Volumenschwerpunks eignen. **Fig. 4b** zeigt einige exemplarische Beispiele von weniger geeigneten Musterelementen 11c, bei welchen zusätzliche Massnahmen ergriffen werden müssen, um jeweils eine sichere Erkennung der Zusammengehörigkeit des einzelnen Musterelements 11c zu gewährleisten.

Muster sind genau dann ungeeignet, wenn es mindestens eine Gerade 4 gibt, die die Figur des Musterelements 11c mehr als einmal schneidet. Bei solchen Mustern können nämlich Fälle auftreten, in welchen zwei getrennte Teilgebiete 3a und 3b desselben Musterelements 11c auf der Ausleselinie 4 (z.B. einer Zeile des Flächensensors 35) zu liegen kommen, welche zum selben Schwerpunkt des selben Musterelements 11c verrechnet werden müssten - jedoch aber nicht direkt erkennbar miteinander verbunden sind. Im einfachsten Beispiel des hier erläuterten Rechenverfahrens entsprechend dieses speziellen Aspekts der Erfindung, ist dieser Fall nicht vorgesehen. Mit Hilfe eines komplizierteren Algorithmus im Sinne der hier beschriebenen Erfindung, können derartige Fälle jedoch ebenfalls abgedeckt werden. Im Sinne einer möglichst einfachen Berechnung und Signalverarbeitung stellt eine Wahl von Codemarken 11d mit konvexen Aussenkonturen, wie diese in Fig. 4a dargestellt sind, eine vorteilhaftere Ausgestaltung dar als die konkaven Codemarkenbeispiele 11c aus Fig. 4b. Werden trotz Verwendung von konvexen Musterelementen 11d bei der Auswertung trotzdem konkave Mustereigenschaften vom Flächensensor 35 oder einer übergeordneten Logik ermittelt, so kann dieses z.B. ein Zeichen für eine Verschmutzung oder einen sonstigen Fehler sein, und es kann z.B. der zugehörige Schwerpunkt verworfen oder bei der Auswertung niedriger gewichtet werden - insbesondere wenn eine entsprechende Marge an zusätzlichen Codemarken 11 vom Flächensensor 35 erfasst wurde.

In einer ersten Ausführungsform einer Schwerpunktsbestimmung kann ein Auslesen des Flächensensors 35 in mehrere Richtungen erfolgen. Der Volumenschwerpunkt kann dabei wie folgt berechnet werden:

$$x_s = \frac{1}{V}\int_K x\,\partial V = \frac{1}{V}\int_{x_a}^{x_b}\int_{y_a(x)}^{y_b(x)}\int_{z_a(x,y)}^{z_b(x,y)} x\,\partial z\,\partial y\,\partial x = \frac{1}{V}\int_{x_a}^{x_b} x \int_{y_a(x)}^{y_b(x)} z(x,y)\,\partial y\,\partial x = \frac{1}{V}\int_{x_a}^{x_b} x\,A_y(x)\,\partial x$$

$$y_s = \frac{1}{V}\int_K y\,\partial V = \frac{1}{V}\int_{y_a}^{y_b}\int_{x_a(y)}^{x_b(y)}\int_{z_a(x,y)}^{z_b(x,y)} y\,\partial z\,\partial x\,\partial y = \frac{1}{V}\int_{y_a}^{y_b} y \int_{x_a(y)}^{x_b(y)} z(x,y)\,\partial x\,\partial y = \frac{1}{V}\int_{y_a}^{y_b} y\,A_x(y)\,\partial y$$

$$V = \int_K \partial V = \int_{x_a}^{x_b} A_y(x)\,\partial x = \int_{y_a}^{y_b} A_x(y)\,\partial y$$

Dabei sind x und y die jeweiligen Auslesekoordinaten-Richtungen, z(x,y) ist der Pixelwert und $x_a$, $x_b$ bzw. $y_a$, $y_b$ die Integrationsgrenzen, als die Auslesekoordinaten von Beginn (a) und Ende (b) der zu bestimmenden Codemarke 11. "K" ist der, vorteilhaft durch eine Sumpfschwellenebene in Form eines Schwellwerts von allfälligem Rauschen abgetrennte, Körper mit Volumen "V", dessen Schwerpunkt "$x_s$, $y_s$" berechnet wird.

In obigen Formeln ist dabei gezeigt, dass in dieser Ausführungsform die Komponenten des Volumenschwerpunkts "$x_s$, $y_s$" mit Hilfe der Flächenschwerpunkte der akkumulierten Flächen "$A_y(x)$, $A_x(y)$" berechnet werden.

**Fig. 5a** und **Fig. 5b** zeigen Beispiele von Ausführungsformen von Pixelanordnungen bei Flächensensoren 35, welche bei einer Implementierung obiger Formeln angewandt werden kann. Die gezeigten Flächensensoren 35 dieser Ausführungsformen werden dabei in zwei, zumindest annähernd orthogonalen Richtungen x (38a) und y (38b) ausgelesen. Die Pixel sind in den beiden Figuren in Form und/oder Anordnung jeweils unterschiedlich ausgebildet, wobei neben den beiden exemplarisch gezeigten, auch andere Ausbildungen einsetzbar sind. Anstelle der gezeigten, in etwa rechteckförmigen optisch aktiven Flächensensor-Struktur könnte z.B. auch eine andere gewählt werden, insbesondere z.B. eine kreisförmige oder hexagonale Struktur. Die Pfeile bei 38a und 38b geben die Austaktrichtung der jeweiligen gleichartig schraffierten Pixel 36a oder 36b an.

In **Fig. 5c** und **Fig. 5d** sind weiter Beispiele von alternativen Ausführungsformen gezeigt, bei welchen die Sensor-Pixelanordnung 36a,36b,36c in mehr als zwei Richtungen 38a,38b,38c ausgelesen wird, insbesondere wobei damit eine zusätzliche Redundanz erzielt werden kann, beispielsweise für eine Fehlererkennung, Fehlervermeidung oder Genauigkeitserhöhung mittels Interpolation oder Least-Square-Fit.

Erfindungsgemäss können neben den in Fig. 5a, Fig. 5b, Fig. 5c, oder Fig. 5d gezeigten, speziellen Ausbildungen der erfassenden Pixel-Konfiguration des Flächensensors auch Ausbildungen im herkömmlichen Sinne, wie etwa z.B. die aus der CCD bzw. CMOS Bildsensoren-Technik bekannten Full-Frame-, Interline-Tranfer-, Frame-Transfer- oder Frame-Interline-Transfer-Prinzipien.

Am Ende der Pfeile 38a,38b,38c ist eine Schaltung, welche den jeweiligen Pixelwert mit einem Sumpfschwellenwert vergleicht, bzw. diesen Sumpfschwellenwert subtrahiert. Die Pixelwerte oberhalb der Sumpfschwelle werden dabei solange aufakkumuliert, als der Pixelwert oberhalb der Sumpfschwelle liegt. Mit dieser Sumpfschwelle wird aus dem gemessenen Pixelbild ein Körper für die Schwerpunktsberechnung unten abgetrennt, insbesondere vom Grundrauschen, Störlicht oder anderen Störungen. Das Pixel, bei welchem das unter- bzw. überschreiten der Sumpfschwelle auftritt stellt somit den Rand einer erfassten Codemarkenfläche dar. Überschreitet ein Pixelwert die Schwelle, wir mit der Akkumulation der folgenden Pixelwerte begonnen, Unterschreitet einer der folgenden Pixelwerte die Schwelle, wird die aufakkumulierte Summe, zusammen mit zumindest einem Pixelindex der Unter/Überschreitung einer weiteren Verrechnungseinheit bereitgestellt. Diese Pixelindices können jeweils z.B. der Index, also die Sensor-Positionskoordinate, des ersten Pixels der akkumulierten Fläche sein, der Index des letzten Pixels der akkumulierten Fläche, und/oder der Index des Pixels nach dem letzten Index der akkumulierten Fläche.

Das Integrieren und/oder die Indexbestimmung können dabei in einer Ausführungsform digital, also nach einer AD-Wandlung der einzelnen Pixelwerte erfolgen. In einer vorteilhaften Ausführungsform erfolgt das Integrieren und/oder der Sumpfschwellenvergleich (bzw. die Sumpfschwellensubtraktion) jedoch analog, also z.B. direkt mit den Photogenerierten Ladungen aus den lichtempfindlichen Pixeln. Die Ladungen werden z.B. mit einem Komparator mit der Sumpfschwelle verglichen und/oder es wird die Sumpfschwelle mit einer Subtrahierschaltung abgezogen (und das Ergebnis danach allenfalls entsprechend mit Null verglichen) und alle aufeinanderfolgenden Werte über der Sumpfschwelle in einem Akkumulator integriert. Die Indices der zugehörigen Pixel, also z.B. die Auslese-Taktzyklen bei welchen das unter- bzw. überschreiten der Sumpfschwelle (also z.B. das Umschalten des Komparators) auftritt, werden gespeichert und bereitgestellt, ebenso der integrierte Wert des Akkumulators, welcher dabei vorzugsweise analog digital gewandelt wird. Anstelle von z(x,y) kann alternaiv auch $z(x,y)+z_a(x,y)$ aufakkumuliert werden ($z_a(x,y)$ist dabei die Sumpfschwelle), was jedoch zu höheren Werten führt und entsprechen einen grösseren Integrator-Speicher und/oder eine höhere ADC-Auflösung erfordert.

Da in der Analog-Integrierenden Ausführungsform das zeitintensive Analog-zu-Digital Wandeln nicht für jedes Pixel, sondern nur für jede Codemarke ausgeführt werden muss, kann somit schneller ausgetaktet und ausgelesen werden als bei einer Wandlung jedes einzelnen Pixels. Unter Einbezug der Annahme, dass zwischen zwei Codemarken ein hinreichender Abstand vorhanden sein muss, und somit im Regelfall nach einem Unterschreiten der Sumpfschwelle eine Mindestzeitdauer bis zum nächsten Überschreiten der Sumpfschwelle vergehen muss, kann ein Teil oder die gesamte Mindestzeitdauer zur Analog-zu-Digital-Wandlung genutzt werden - mit anderen Worten kann dabei die Austaktung der (insbesondere unter dem Schwellwert liegenden) Lücken zwischen zwei Codemarken zeitgleich mit der AD-Wandlung erfolgen.

Die oben beschriebenen Auslesungen des Flächensensors können dabei für jeden der gezeigten Pfeile 38a,38b,38c einer Richtung separat, also zeitlich parallel, oder für mehrere oder alle der Pfeile 38a,38b,38c in zeitlicher Sukzession erfolgen.

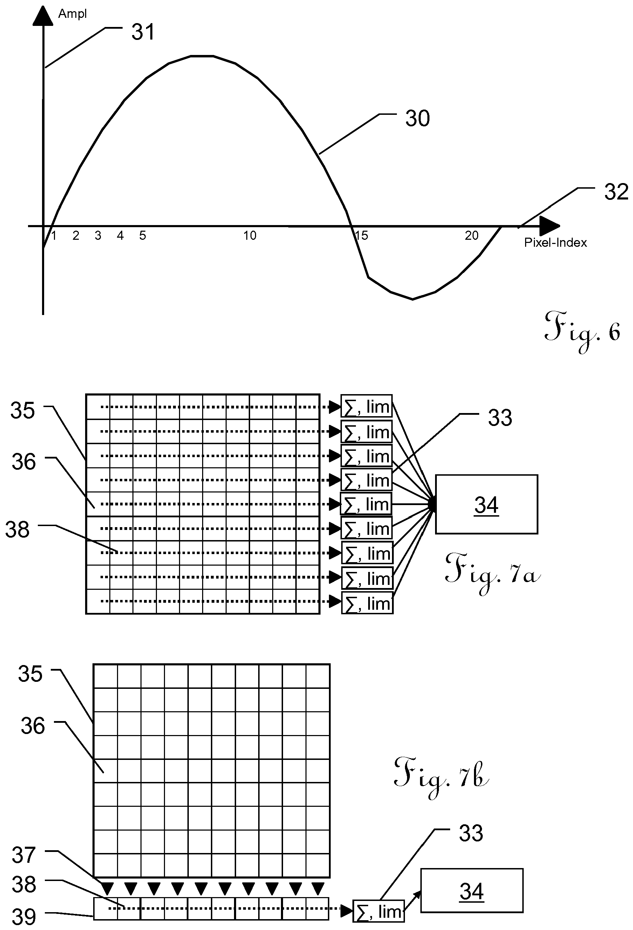

Fig. 6 zeigt ein Beispiel eines Ausschnitts eines typischen Signals, welches man bei einer Austaktung einer Zeile (bzw. Spalte) eines Flächensensors erhält, wenn eine Codemarke eines erfindungsgemässen Flächen-Positionscodes erfasst wird. Auf der Abszisse 32 ist jeweils der Index des ausgetakteten Pixels gezeigt, auf der Determinante 31 der jeweilige Pixel-Wert, welcher bei Photosensoren z.B. proportional der Anzahl der aufgefangenen Photonen ist. Die Pixel-Werte sind in der Figur entsprechend ihrer Amplitude zu einer stetigen Kurve 30 verbunden - genau genommen handelt es sich aber pro Pixel-Index 32 um jeweils einen diskreten Amplitudenwert 31, welcher von demjenigen Pixel an der, dem Index entsprechenden Positionskoordinate des Flächensensors kommt.

In der Figur stellt die Abszisse 32 die Sumpfschwelle dar, es ist also die Pixelamplitude 31 abzüglich einer Sumpfschwelle, welche generell grösser Null ist, aber allenfalls in einer speziellen Variante auch Null sein könnte.

Es ist zu erkennen, dass Pixel Nr. 1 bis 14 oberhalb der Sumpfschwelle liegen. Diese Pixelwerte werden, wie beschreiben vorzugsweise analog, zu einer Fläche A zwischen der Kurve 30 und der Achse 32, als der Summe der entsprechenden Pixel-Werte mit

$$A = \sum_{i=1}^{14} z_i$$

verrechnet bzw. akkumuliert. Der Wert A wird dann analog/digital gewandelt und zusammen mit den Indices "1" der Schwellwertüberschreitung und "15" der Schwellwertunterschreitung einer Recheneinheit zugeführt. Diese Recheneinheit verknüpft alle zusammengehörigen Flächen, was - insbesondere bei konvexen Codemarkenflächen - anhand der Indices mit verhältnismässig geringem Rechenaufwand durchführbar ist. Als Grundregel kann dabei z.B. angenommen werden: Überlappen sich Indizes benachbarter Zeilen/Spalten, so gehören die zugehörigen Flächen zum gleichen Volumen.

Aus den damit bestimmbaren Volumen wird im Anschluss der Schwerpunkt entsprechend den weiter oben gezeigten Formeln berechnet. Die Recheneinheit für die digitale Berechnung des Schwerpunktes der jeweiligen Koordinate kann in Software oder vorzugsweise in Hardware (z.B. als CPLD, FPGA, ASIC, etc.) ausgebildet sein, beispielsweise unter Verwendung zweier Akkumulatoren und einer Division. Damit erhält man die für die Auswertung eines erfindungsgemässen Positionscodes nutzbaren Schwerpunkte der Codemarken in zwei oder drei Koordinaten.

Bei den Ausführungsformen mit einer Flächensensor-Auslesung in drei Koordinaten, ist eine redundant, da das bei den jeweiligen Koordinaten berechnete Volumen überall gleich sein sollte. Ist es nicht gleich, kann der zugehörige Schwerpunkt verworfen werden oder es kann eine Interpolation, ein Voting-Verfahren, etc. durchgeführt werden.

Ein Nachteil von Flächensensoren entsprechend obiger Ausführungsform aus Fig. 5a,5b,5c,5d ist - neben der unkonventionellen speziellen Auslesestruktur - dass bei diesen, in mehrere Richtungen ausgelesenen Flächensensoren eines der Pixel jeweils entweder zur Bestimmung der Schwerpunktskoordinate in X-Richtung oder in Y-Richtung beiträgt, in der jeweils anderen Richtung jedoch keinen Beitrag leistet. Es wird somit also nur ein Bruchteil der - in Form von photoaktiven Elementen vorhandenen - physikalischen Pixel-Auflösung des Flächensensors in jeder der jeweiligen Richtungen zur Schwerpunktbestimmung genutzt. In der im Folgenden beschriebenen Ausführungsform soll dieses vermieden werden, also insbesondere jeder der Pixel Informationen für beide der Schwerpunktskoordinatenrichtungen beitragen.

Fig. 7a zeigt ein Beispiel eines nur zeilenweise auslesbaren Flächensensors 35, welcher entsprechend dieser Ausführungsform dieses Aspekts der Erfindung einsetzbar ist. Bei diesem können die Zeilen 36 parallel zueinander ausgelesen werden, also alle oder mehrere der Sensorzeilen 36 gleichzeitig ausgetaktet werden. Vorzugsweise steht der Flächensensor 35 mit einer zumindest teilweise analogen Signalverarbeitung 33 zur Schwerpunktsbestimmung in Verbindung, speziell z.B. mit einer analogen Integration, analogen Schwellwertermittlung und/oder einer analogen Sumpfschwellensubtraktion. Die Resultate der Signalverarbeitung 33 werden dann - vorzugsweise digitalisiert - von einer Recheneinheit 34 weiterverarbeitet, mittels welcher die Lagen der Schwerpunkte von erfassten Codemarken in zweidimensionalen Pixelkoordinaten des Flächensensors ermittelt werden, vorzugsweise mit einem fraktionalen Anteil der Pixelkoordinaten. Vorzugsweise werden dabei auch eine Ausrichtung der Zeilen-Achsen des Flächensensors gegenüber den Zeilen-Achsen des erfindungsgemässen Flächen-positionscodes als weiterer Freiheitsgrad bestimmt.

Fig. 7b zeigt ein weiteres Beispiel eines zeilenweise auslesbaren Flächensensors, welcher entsprechend dieser Ausführungsform des Aspekts der Codemarken-Lagenbestimmung der Erfindung einsetzbar ist. Bei diesem Flächensensor erfolgt die zeilenweise Austaktung der erfassten Pixel-Werte der Sensorfläche 35 in Richtung 38 über eine Auslesezeile 39. Es kann beispielsweise ein CCD-Chip auf Basis eines Full-Frame-, Frame-Transfer-, Interline-Transfer- oder Frame-Interline-Transfer-Prinzips genutzt werden. Vorzugsweise weist der Flächensensor 35 wie in Fig. 7a eine zumindest teilweise analogen Signalverarbeitung 33 zur Schwerpunktsbestimmung auf bzw. steht mit einer solchen in Verbindung, speziell z.B. mit einer analogen Integration, analogen Schwellwertermittlung und/oder einer analogen Sumpfschwellensubtraktion. Die Resultate der Signalverarbeitung 33 werden dann - vorzugsweise digitalisiert - von einer Recheneinheit 34 weiterverarbeitet, mittels welcher die Lagen der Schwerpunkte von erfassten Codemarken in zweidimensionalen Pixelkoordinaten des Flächensensors ermittelt werden. Alternativ oder zusätzlich kann dabei auch eine Ausrichtung der Zeilen-Achsen des Flächensensors gegenüber einer Zeilen-Achsen-Richtung des erfindungsgemässen Flächenpositionscodes ermittelt werden.

Im Unterschied zur vorigen Ausführungsform der Flächencode-Auswertung wird, in nicht einschränkender Weise, in der im Folgenden im Detail erläuterten Ausführungsform nur noch in einer Richtung - im gezeigten Beispiel nach rechts - ausgelesen, was eine Anwendung eines nur zeilenweise auslesbaren Flächensensors ermöglicht.

Um dennoch die Schwerpunktskoordinaten in zwei Dimensionen zu erhalten werden zusätzlich zu den Körperflächen A die Wert "$A_x(y)$" bestimmt, Formal ausgedrückt als

$$\tilde{A}_x(\tilde{x}, y) = \int\limits_{x_a(y)}^{\tilde{x}} z(x, y)\, \partial x$$

und

$$A_x(y) = \tilde{A}_x(x_b(y), y)\,.$$

Daraus lassen sich infolge die Körpermomente

$$M_x(y) = \int\limits_{x_a(y)}^{\tilde{x}_b(y)} \tilde{A}_x(\tilde{x}, y)\, \partial \tilde{x}$$

bestimmen.

Bei obiger Bestimmung können insbesondere zwei Varianten vorteilhaft sein, nämlich:
$\tilde{x}_b(y)=x_b(y)$ oder alternativ $\tilde{x}_b(y)=x_b(y)-1$.

In einer digitalen bzw. numerischen Ausführungsform kann eine digitale Bestimmung obiger Daten erfolgen, für welche jeder Pixel-Wert z(x,y) für sich Analog zu digital gewandelt werden muss. In einer bevorzugten Ausführungsform kann zumindest eine der Integralbildungen wiederum mit analogen Signalen ausgeführt werden, beispielsweise indem die Ladungen der zu integrierenden Pixel in einem gemeinsamen Akkumulator integriert werden und/oder die Integrationsgrenzen mit einem analogen Komparator ermittelt werden. Erst die resultierenden Integral-Werte "$A_x(y)$" und/oder "$M_x(y)$" werden dann einer Analog-Digital-Wandlung zugeführt und zur weiteren Berechnung bereitgestellt. Aus diesen Informationen werden dann numerisch die gesuchten Volumenschwerpunkte nach den Formeln

$$x_s = \frac{1}{V} \int_{y_a}^{y_b} (\tilde{x}_b(y) + 1) \cdot A_x(y) - M_x(y) \; \partial y$$

und

$$y_s = \frac{1}{V} \int_{y_a}^{y_b} y \, A_x(y) \; \partial y \quad ,$$

sowie das Volumen

$$V = \int_{y_a}^{y_b} A_x(y) \; \partial y \quad ,$$

vorzugsweise digital bestimmt. Die Volumenschwerpunkte $x_s$ uns $y_s$ geben dabei die Lagen einer erfassten Codemarke in Bezug auf den Sensor an und das Volumen V zusätzlich eine Information über die Grösse bzw. Fläche bzw. Sensor-Kontrastwert dieser Codemarke.

In derselben Weise kann alternativ beispielsweise auch eine Auslesung in Spaltenrichtung oder einer sonstigen Richtung erfolgen und mit entsprechenden, obigen Gleichungen die Schwerpunkskoordinaten und auch das Volumen bestimmt werden.

Sind Pixel in den aufeinander folgenden Zeilen des Flächensensors versetzt angeordnet (beispielsweise bei einer hexagonalen Pixelstruktur, odgl.), so kann ein derartiger Versatz berücksichtigt werden, beispielsweise indem dieser Versatz bei der Berechnung von "$x_s$" zu "$\tilde{x}_b$" addiert wird.

Die folgende Tabelle stellt ein Beispiel eines Flächensensors dar. Die Zeilen und Spalten sind jeweils mit dem Index ihrer Pixelkoordinaten beschriftet. Die Zahlenwerte in den Tabellen bei den jeweiligen Pixelindices x und y entsprechen den jeweiligen Pixelwerten $z(x,y)$, also den vom Sensor erfassten Informationen über die Codemarke. Ein "-" stellt dabei einen Wert unterhalb der Sumpfschwelle dar, die gezeigten Werte können also insbesondere als Pixelamplitudenwert abzüglich der Sumpfschwelle angesehen werden.

Gegenüber der in diesem einfachen Beispiel gezeigten Ausführung zur Illustration des erfindungsgemässen Prinzips, kann der Flächensensor in praktischen Realisierungen eine weitaus höhere Anzahl von Pixeln und auch eine höhere Positionsauflösung aufweisen. Der Flächensensor erfasst dabei üblicherweise auch mehrere Codemarken gleichzeitig, wohingegen hier nur ein Ausschnitt des Flächensensors gezeigt ist, welcher eine einzige Codemarke erfasst. Einzelne Codemarken können dabei z.B. in einfacher Weise anhand der Zusammengehörigkeit der Indizes, bei welchen der Schwellwert über- bzw. unterschritten wird, Auseinandergehalten werden.

| x / y | 0 | 1 | 2 | 3 | 4 | 5 |
|---|---|---|---|---|---|---|
| 0 | - | - | - | - | - | - |
| 1 | - | - | 1 | 2 | - | - |
| 2 | - | 3 | 4 | 5 | 6 | - |
| 3 | - | 7 | 8 | 9 | 1 | - |
| 4 | - | - | 2 | 3 | - | - |
| 5 | - | - | - | - | - | - |

Mit dem erfindungsgemässen Positionscodesensor gilt es eine Lage des Schwerpunkts der vom Flächensensor erfassten Codemarke in Pixelkoordinaten des Flächensensors zu bestimmen. In vorteilhafter Weise wird gemeinsam mit den Schwerpunktskoordinaten auch das Volumen als ein Indikator für die Grösse der erfassten Codemarke bereitgestellt.

Mit der oben erläuterten, vorzugsweise zumindest teilweise analogen Ermittlung entsprechend dem oben gezeigten Formalismus, bestimmt sich die Schwerpunktslage des in diesem Beispiel gezeigten Körpers zu:

$$x_s = 2.4510$$

und

$$y_s = 2.6275.$$

Ein Beispiel von Berechnungen und Werten zu obigen Beispiel ist zur verdeutlicht des erfindungsgemässen Vorgangs der Schwerpunktsbestimmung in folgender Tabelle gezeigt, wobei die Integrale entsprechend durch Summen ersetzt sind. Dabei wird - wie beschrieben - $A_x(y)$ vorzugsweise mittels analoger Summierung der Pixelwerte bestimmt und erst der Summenwert digitalisiert. Der Index $x_b(y)$, bei welchem die Sumpfschwelle überschritten wird, kann beispielsweise mit einem Erfassen eines Zählerstands der Austaktung zu dem Zeitpunkt, bei welchem ein analoger Komparator einen Pixelwert detektiert, welcher die Sumpfschwelle überschreitet, erfolgen. Das Moment $M_x(y)$ kann ebenfalls mit einer analogen Integration ausgebildet sein, beispielsweise über eine Operationsverstärkerschaltung oder auch über eine andere analoge Schaltung welche eine entsprechende Summierung zu diesem Moment implementiert. Alternativ kann diese zweite Integration allenfalls auch zumindest teilweise in digitaler Form realisiert werden.

Eine analoge Implementierung ist dabei insbesondere vorteilhaft, wenn diese zeitlich schneller durchführbar ist als eine analog zu digital Wandlung jedes einzelnen Pixels mit einer anschliessenden digitalen Verarbeitung.

| Index y | $A_x(y)$ | $\tilde{x}_b(y)+1$ | $M_x(y)$ |
|---------|----------|--------------------|----------|
| 1 | 1+2=3 | 4 | 1+(1+2)=4 |
| 2 | 3+4+5+6=18 | 5 | 3+(3+4)+(3+4+5)+(3+4+5+6)=40 |
| 3 | 7+8+9+1=25 | 5 | 7+(7+8)+(7+8+9)+(7+8+9+1)=71 |
| 4 | 2+3=5 | 4 | 2+(2+3)=7 |

Die Informationen aus obiger Tabelle, welche von einem erfindungsgemässen Flächensensor zur Schwerpunktsbestimmung, insbesondere im wesentlichen analog und in entsprechend kurzer Zeit ermittelt und vorzugsweise digital, bereitgestellt werden, werden dann einer Recheneinheit zugeführt.

Diese Recheneinheit kann daraus das Volumen

$$V = 3+18+25+5 = 51,$$

insbesondere durch einfach zu implementierende sukzessive Additionen, bestimmen.

Optional könnte auch dieses Volumen analog integriert werden, was aufgrund der bei der anschliessenden AD-Wandlung erforderlichen AD-Auflösung - welche entsprechend höher sein muss als jene der Einzelsummanden $A_x(y)$ - allenfalls jedoch keinen wesentlichen Vorteil mehr darstellt.

In Folge lassen sich durch die Recheneinheit die Schwerpunktkoordinaten

$$y_s = \frac{1 \cdot 3 + 2 \cdot 18 + 3 \cdot 25 + 4 \cdot 5}{51} = \frac{134}{51} = 2.6275 = 4 - \frac{3 + (3 + 18) + (3 + 18 + 25)}{51}$$

und

$$x_s = \frac{(4 \cdot 3 - 4) + (5 \cdot 18 - 40) + (5 \cdot 25 - 71) + (4 \cdot 5 - 7)}{51} = \frac{125}{51} = 2.4510$$

bestimmen. Erfindungsgemäss könnte in analoger Weise dabei alternativ auch die oben beschriebene, zweite Variante der Berechnung der Körpermomente genutzt werden, welche zu denselben Endergebnissen von $y_s$ und $x_s$ führt.

Eine Ausnahme des oben beschriebenen Vorteils einer analogen Integralbildung kann z.B. eine spezielle Ausführungsform der vorliegenden Erfindung darstellen, bei welcher die AD-Wandlung der Pixelwerte rein binär, also mit einem 1-Bit AD-Wandler bzw. einem Komparator erfolgt. Dabei werden beispielsweise alle Pixelwerte, welche in obiger Pixelwerttabelle nicht mit "-" dargestellt sind zu Eins ausgewertet und summiert, es wird also z.B. der Ausgang eines analogen Komparators für die Sumpfschwellenüberschreitung mit jedem Pixeltakt aufsummiert, (sprich ein Zähler erhöht) bis der erste Pixelwert wieder unter dem Sumpfschwellwert liegt. Damit wird zwar die Auflösungsfähigkeit der Schwerpunktskoordinatenbestimmung eingeschränkt, jedoch entfällt das analoge integrieren ganz, bzw. reduziert sich auf einen digitalen Zähler, was ebenfalls eine schnelle Verarbeitung ermöglicht. Insbesondere bei einer im vergleich zu den Codemarken hohen lateralen Positionsauflösung des Flächensensors, also bei vielen Pixeln, kann diese Variante vorteilhaft sein.

Das Auslesen in nur einer Richtung hat auch den Vorteil, dass genau die gleiche Pixelinformation für beide Koordinatenrichtungen verwendet wird. Daher muss keine Korrektur für einen Pixelversatz vorgenommen werden. Zudem gestaltet sich die Flächensensor-Struktur einfacher. Die Zweifach-Integration, welche sich in dieser Ausführungsform zwischen Austaktung der Zeile und dem ADC befindet, kann als analoge Zweifach-Integrierschaltung, beispielsweise mit einer Operationsverstärkerschaltung ausgebildet werden.

Ein weiterer Vorteil dieser Ausführungsform ist, dass sich Störeinflüsse, welche sich in gleicher Weise auf die analoge Berechnung von "$A_x(y)$" und "$M_x(y)$" auswirken, sich in einer erfindungsgemässen Realisierung zum grossen Teil herauskürzen. Unter Berücksichtigung dieses Aspekts gestaltet sich das Design und die Auslegung der Analogschaltung entsprechend einfacher.

Das erfindungsgemässe Konzept eines Flächensensors kann mit mehreren Chips implementiert werden, insbesondere mit einem Flächensensor und einem getrennten und/oder gemeinsamen Auswertechips für die analoge und/oder digitale Auswertung. Alternativ kann auch der Flächensensor und die erfindungsgemässe analoge Integration - sowie allenfalls auch die Analog-zu-Digital-Wandlung - auf demselben Chip untergebracht sein. Optional kann zusätzlich auch ein Mikrocontroller/DSP oder ein FPGA-Core auf dem Chip integriert sein. Dabei können insbesondere Hardwarebeschleuniger z.B. für Teile der digitalen Schwerpunktsberechnung, Regressionsrechnungen, Histogramme, etc. implementiert werden, um den Mikrocontroller/DSP zu entlasten.

Insbesondere in einer erfindungsgemässen Ausführungsform mit analoger Integration bei der Schwerpunktsbestimmung können mit aktueller Technologie bei vertretbarem Stromverbrauch Messraten der Ermittlung der vom Flächensensor erfassten Schwerpunkte sowie deren Bereitstellungsraten in der Grössenordnung von beispielsweise bis zu 100 kHz oder sogar deutlich grösser erzielt werden.

In einer anderen Anwendung, als mit dem oben beschriebenen Positionscode entsprechend der vorliegenden Erfindung, könnte der hier Beschriebene Flächensensor zur Schwerpunktsbestimmung allenfalls auch als eigenständige Erfindung betrachtet werden.

Anders ausgedrückt handelt es sich um einen Flächensensor, welcher speziell zur Bestimmung von Schwerpunktskoordinaten von zumindest einer Codemarke eines Positionscodes ausgebildet ist, insbesondere um einen optischen Flächensensor, beispielsweise in CCD- oder CMOS- Technologie, zur Schwerpunktsbestimmung von optischen Codeelementen, mit einem Array von Sensorelementen, insbesondere in einer regelmässigen zweidimensionalen Anordnung der Sensorelemente, welches ausgebildet ist um jeweils für eine Zeile des Arrays, bei überschreiten eines definierten Schwellenwerts des ausgelesenen Werts eines ersten Sensorelements,
ein Integrieren der Werte der folgenden Sensorelemente dieser Zeile des Arrays in einer Summe,
bis zu einem überschreiten eines definierten Schwellenwerts des Werts eines zweiten Sensorelements durchzuführen, insbesondere wobei das Integrieren mit einem analogen Ladungsspeicher erfolgt.

Dabei kann jeweils ein Positionsindex des ersten und zweiten Sensorelements erfasst werden und der erste und zweite Positionsindex und der Summe bereitgestellt werden. Insbesondere kann der Flächensensor eine Recheneinheit aufweisen, welche ausgebildet ist um aus dem ersten und zweiten Positionsindex und der Summe von mehreren Zeilen ein Positionsindex eines Volumenschwerpunkts der Codemarke zu ermitteln, insbesondere wobei für überlappende Positionsindices in benachbarten Zeilen Summen der Zeilen zu Volumen verrechnet werden. Dabei kann dieses Verrechnen zu Volumen mit einer analogen Integrator-Schaltung erfolgen. Der Flächensensorchip kann dabei auch derart ausgebildet sein, dass diese einen Sumpfschwellwert von den ausgelesenen Werten jedes Sensorelements abzieht, insbesondere wobei dieses Abziehen analog erfolgt.

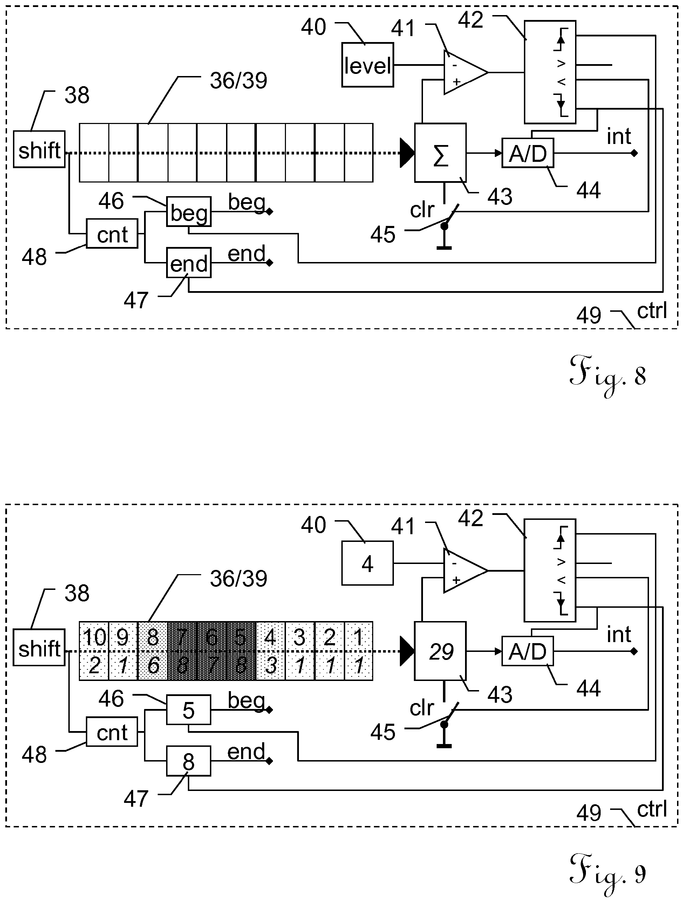

Fig. 8 zeigt ein Beispiel einer Ausführungsform eines Flächensensors zur Schwerpunktsbestimmung entsprechend der Erfindung in einem vereinfachten Blockdiagramm zur Verdeutlichung der erfindungsgemässen Funktionalitäten, welche in unterschiedlichen praktischen Ausgestaltungen implementiert sein können. Diese Ausführung nutzt - im Gegensatz zu der erfindungsgemäss ebenfalls einsetzbaren, digitalen Integralbildung - eine analoge Integration der Sensorwerte. Gezeigt ist eine auszulesende Zeile 36 oder 39, also z.B. eine aktive Sensor-Zeile, eine Auslesezeile oder eine Zwischenspeicher-Zeile eines hier nicht dargestellten Sensorchips der ausgebildet ist, Codemarken eines Positionscodemusters 21 in einem Positionsgeber auszuwerten. Die Zeile 36/39 enthält eine Folge von geometrisch sukzessive ermittelten Abtastwerten des Positionscodes, welche auch als Pixel-Werte oder mit z(x,y) bezeichnet werden. Entlang dieser Zeile ist eine x-Richtung definiert. Diese Pixel-Werte können der Reihe nach ausgelesen werden, beispielsweise mit einem Schieberegister oder mit einer entsprechend ausgebildeten Schalter-Matrix. Gezeigt ist beispielsweise eine CCD-Auslesezeile 39, deren Inhalt auf Basis des Taktsignals 38 in Pfeilrichtung verschoben werden kann. Der Zähler 48 zählt dabei den Index des aktuell am Ausgang der Zeile anliegenden Pixels. Der aktuelle Pixel-Wert am Ausgang wird jeweils mit einem Sumpfschwellwert 40 verglichen, was hier mit dem Komparator 41 symbolisiert ist, dessen Ausgang der Auswerteschaltung 42 zugeführt wird. Alternativ kann auch der Sumpfschwellwert 40 vom Pixel-Wert abgezogen werden und das Resultat dann mit grösser oder kleiner Null (bzw. Positiv oder annähernd Null - falls keine Negativen Werte möglich sind) verglichen werden. Der Sumpfschwellwert 40 kann dabei fest vorgegeben, parametrierbar oder dynamisch anpassbar ausgestaltet werden. Ihm kommt primär die Aufgabe zu, Störsignale der Sensoren zu unterdrücken und eine Unterscheidung zwischen Codemarken und Lücken zwischen den Codemarken durchzuführen. zwischen

Ist der Pixel-Wert über dem Sumpfschwellwert, so handelt es sich um eine Codemarke. Eine positive Flanke zwischen einem Pixel-Wert z unterhalb der Sumpfschwelle und einem darauf folgenden Pixel-Wert oberhalb der Sumpfschwelle kennzeichnet somit den Beginn einer Codemarke. In diesem Blockdiagramm wird bei einem derartigen Beginn der zugehörige Pixel-Index des Zählers 48 als Codemarken-Beginn-Index 46 gespeichert (latched) und zur weiteren Auswertung bereitgestellt.

Eine negative Flanke zwischen einem Pixel-Wert z oberhalb der Sumpfschwelle und einem darauf folgenden Pixel-Wert unterhalb der Sumpfschwelle kennzeichnet somit den Ende einer Codemarke. In diesem Blockdiagramm wird bei einem derartigen Ende der zugehörige Pixel-Index des Zählers 48 als Codemarken-Ende-Index 47 gespeichert (latched) und zur weiteren Auswertung bereitgestellt.

Zwischen Beginn 46 und Ende 47 befinden sich (zumeist mehrere) Pixel mit Werten über der Sumpfschwelle 40, deren Anzahl die Breite der Codemarke in Richtung x der Zeile angibt. Mit dem Pixel-Werts steht dabei auch Information bezüglich einer Sub-Pixel-Auflösung bereit.

Alle Pixel-Werte über der Sumpf schwelle - also jene einer Codemarke - werden im - hier analog ausgebildeten - Integrator 43 aufsummiert, also beispielsweise in einen gemeinsamen Speicher wie etwa einen Potentialtopf oder einen Kondensator verschoben, in welchem die Pixel-Werte von Beginn 46 bis Ende 47 der Codemarke in x-Richtung Integriert werden. Am Ende der Codemarke wird der Integrierte Summenwert 43 - in dieser Ausführungsform vorzugsweise mit dem A/D-Wandler 44 digitalisiert - bereitgestellt. Insbesondere wird das Codemarken-Integral gemeinsam mit den zugehörigen Werten des Beginn- und/oder Ende-Index dieser Codemarke, als zusammengehörendes Informationspaket über diese Codemarken bereitgestellt. In den Lücken zwischen den Codemarken, in welchen der Pixel-Wert unter dem Schwellenwert 43 liegt, wird nicht integriert und der Wert des Integrator 43 kann, wie mit dem Rücksetz-Symbol 45 angedeutet, gelöscht werden.

Da eine Zeile im allgemeinen mehre Codemarken des Flächen-Positionscodemusters erfasst, werden pro ausgelesener Zeile Informationspakete über mehre Codemarken bereitgestellt, und z.B. zur weiteren Verarbeitung jeweils gespeichert. Oben beschriebener Vorgang wird bei einem Flächensensor für alle interessierenden Zeilen der Sensor-Fläche (hier auch als y-Richtung bezeichnet) durchgeführt. Dieses Erfindungsgemässe Prinzip kann optional aber auch im Sonderfall einer einzigen Sensor-Zeile entsprechend Anwendung finden um Schwerpunkte und/oder Breiteninformationen der Codemarken zu ermitteln.

Im Gegensatz zu einer weiter oben erwähnten Digitalisierung eines jeden einzelnen Pixel-Werts kann das Austakten der Zeile entsprechend dieses Aspekts der Erfindung entsprechen schneller erfolgen, da das zeitkritische A/D-Wandeln nur mehr 1 mal pro Codemarke und nicht 1 mal für jeden Pixel des Sensors erfolgt.

Der oben Beschriebene Ablauf wird dabei von einer Übergeordneten, ins Soft- und/oder Hardware implementieren Kontroll-Logik 49 gesteuert, welche auch mit der übergeordneten Recheneinheit zur Schwerpunktsbestimmung in Verbindung steht, auf Basis welcher Schwerpunkte der erfasste Ausschnitt des Flächen-Positionscodemusters ausgewertet und die Absolutposition bestimmt wird.

Fig. 9 zeigt ein konkretes Zahlenbeispiel einer Ausführungsform ähnlich jener von Fig. 8, bei welcher die gezeigten Elemente bereits erläutert wurden. Die auszulesende Zeile 36/39 zeigt nun in der oberen Hälfte den Pixel-Index, welcher auch beim Austakten 38 mit Block 48 erfasst wird. Der Index beginnt hier mit 1, könnte aber auch mit 0 oder einem anderen Startwert beginnen. Die Zellen der Zeile 36/39 sind entsprechend des erfassten Pixel-Wert heller und dunkler gemustert dargestellt. In der unteren Hälfte ist jeweils der zugehörige Sensor-Wert auch als Zahl dargestellt. Der Schwellwert 40 zur Erkennung einer Codemarke ist hier 4 gewählt, wobei aller hier verwendeten Werte rein beispielhaft und nicht einschränkend sind.

Der Vergleich 41 mit dem Schwellwert 40 ergibt hier einen Beginn-Index 46 von = 5 und einen End-Index 47 von = 8 für die hier der illustrativen Einfachheit halber einzigen vom Sensor erfassten Codemarke. Begin-Index 46 und End-Index 47 der Codemarke werden jeweils gespeichert bzw. zur Speicherung und/oder weiteren Auswertung bereitgestellt. Die Auswertung kann dann in einer digitalen und/oder zumindest teilweise analogen Recheneinheit erfolgen, welche einen Positionsindex des Schwerpunkts der erfassten Codemarken bestimmt, z.B. wie dies in einigen beispielhaften Varianten hier erläutert ist.

Mit Begin-Index 46 und End-Index 48 wird auch der Integralwert 43 über die Codemarke in Sensorrichtung im analogen Integrator 43 ermittelt und - in diesem Beispiel vorzugsweise über den Wandler 44 digitalisiert - bereitgestellt. Hier entspricht die Summe der Pixel-Werte vom Beginn-Index = 5 bis zum End-Index = 8 einem Wert von 8+7+8+6=29. Die Digitalisierung kann dabei deutlich langsamer als die Austaktung erfolgen, da diese vom Ende der Codemarke bei der negativen Schwellwert-Vergleichs-Flanke bis zur Begin-Flanke der darauf folgenden Codemarke dauern kann - bei Verwendung eines Sample&Hold A/D-Wandler 44 sogar bis zur nächsten End-Flanke der darauf folgenden Codemarke.

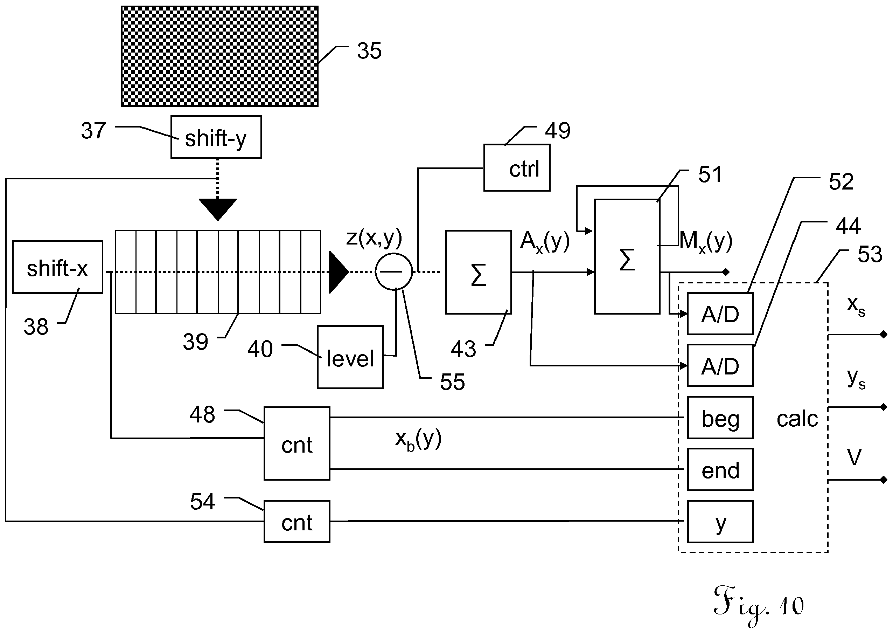

**Fig. 10** zeigt ein Beispiel einer Ausführungsform, bei welcher der Flächensensor 35 ähnlich wie zuvor bei Fig. 8 und Fig. 9 beschrieben ausgewertet wird, hier jedoch eine zweite analoge Integration erfolgt, mit welcher insbesondere Schwerpunkts-Koordinaten von Positionscodemarken in zumindest zwei Richtungen x und y ermittelt werden. In dieser erfindungsgemässen Ausführungsform erfolgt die Auslesung des zweidimensionalen Flächensensors 35 zur Codemarken-Schwerpunktermittlung stets nur in Zeilenrichtung x, es werden aber dennoch Schwerpunktskoordinaten in zumindest zwei Freiheitsgraden ermittelt. Die in erfassten Werte in den, in y-Richtung aneinandergereihten Zeilen des Sensor 35, werden in der gezeigten Variante einer Ausführungsform über den Zeilen-Takt 37 zeilenweise in eine Auslesestruktur 39 verschoben. Dort werden die einzelnen Pixel-Werte der jeweiligen Zeile in x-Richtung mit dem Pixel Takt 38 ausgetaktet. In der gezeigten Ausführungsform wird vom Ausgetakteten Pixel-Wert jeweils ein Schwellenwert 40 abgezogen, was mit Symbol 55 dargestellt ist. Die Ausführungsform in diesem Beispiel ist dies derart ausgebildet, dass dabei auch bei Pixel-Werten unterhalb des Schwellwerts die Differenz minimal Null und nicht kleiner Null werden kann. Ein Anstieg des Differenz-Werts über Null wird von der Steuereinheit 49 als Beginn einer Codemarke detektiert und ein darauf folgendes Abfallen des Differenz-Werts auf (zumindest annähernd) Null wird als Ende einer Codemarke detektiert. Der in Block 48 erfasste Index $x_b(y)$, wird jeweils für das Beginn-Pixel und End-Pixel der Codemarke erfasst und zur weiteren Verarbeitung bereitgestellt. Die ermittelte Differenzen der Codemarken-Pixel werden zur Summenbildung im Integrator 43 zu $A_x(y)$ aufakkumuliert und bei Detektion des Endes der jeweiligen Codemarken bereitgestellt und einer weiteren Verarbeitung zugeführt, also beispielsweise A/D-gewandelt 44 und/oder analog zur Weiterverarbeitung übergeben. Nach Übergabe kann der kann Integralwert 43 gelöscht werden, um den Wert einer darauf folgenden Codemarke aufnehmen zu können. Alternativ zur Subtraktion 55 des Sumpfschwellwerts 40 kann auch wie bereits erläutert ein Vergleich mit dem Schwellwert erfolgen, anhand dessen Ergebnis der aktuelle Pixel-Wert akkumuliert oder verworfen wird.

Da der Flächensensor 28 in einer Zeile üblicherweise mehrere Codemarken 11 erfasst, können entweder die Ergebnisse des Integrators 43 und/oder des Index 48,54 für jede der erfassten Codemarken 11 analog oder digital gespeichert werden, oder es wird für jede der erfassten Codemarken 11 ein separater Integrator 43 vorgesehen, welche Integratoren 43 sukzessive für die Codemarken 11 genutzt werden. Ein solches Vorgehen ist in vielen Fällen möglich, da die Maximal zu erwartenden Anzahl von Codemarken in einer Zeile per Design bekannt sein sollte. Zur Speicherung kann unter anderem beispielsweise auch eine CCD-artige Schieberegister-Struktur, ähnliche der Auslesezeile, genutzt werden

In oben beschriebener Weise wird (in diesem Beispiel sukzessive, alternativ aber auch parallel) für alle interessierenden Sensor-Zeilen y des Flächensensors 35 verfahren. In der hier gezeigten Variante wird dabei Zeile für Zeile mit Block 37 in das Ausleseregister 39 verschoben. Der zugehörige y-Index wird mit Block 54 erfasst und bereitgestellt.

In der gezeigten Ausführungsform wird zusätzlich zu $A_x(y)$ auch das Moment $M_x(y)$ - insbesondere wie den Formeln und Beispielen zuvor beschrieben - mit einer zweiten analogen Integration 51 ermittelt und als analogwert zur Digitalisierung 52 und/oder analogen Weiterverarbeitung bereitgestellt.

Eine Recheneinheit 53 bestimmt, basierend auf den bereitgestellten Werten die Schwerpunktskoordinaten $x_s$ und $y_s$ sowie optional auch das Volumen V der Codemarken des Flächen-Positionscodemusters und stellt diese zur Auswertung der, insbesondere absoluten, Position und oder Drehlage des Flächensensors 35 gegenüber dem Flächen-Positionscodemuster 21 in einem oder mehreren Freiheitsgraden bereit. Die dabei abgewendeten Grundsätze zur Berechnung wurden anhand der Beispiele zuvor bereits erläutert. Die Recheneinheit 53 kann dabei vollständig digital, vollständig analog oder auch hybrid ausgeführt sein und insbesondere den oben beschriebenen oder einen äquivalenten Formelapparat zur Bestimmung der Schwerpunktlagen implementieren. Eine digitale Implementierung kann in Soft- und/oder Hardware erfolgen. Ebenso kann die Recheneinheit 53, insbesondere im Zusammenspiel mit Block 49, die Koordination des beschriebenen Ablaufes abwickeln. Dabei können auch komplexere Fehlererkennungs- und Behandlungsroutinen, Votings der ermittelten Schwerpunktlagen, Mittelungen, Ausgleichsrechnungen, Kausalitätsprüfungen, etc. (auf welche hier nicht im Detail eingegangen wird) sowie die Bestimmung der Absolutposition implementiert werden.

Weiterbildungen und spezielle Ausführungsformen können wie zuvor beschrieben ausgebildet sein, insbesondere auch in, von den gezeigten Beispielen abweichenden Kombinationen.

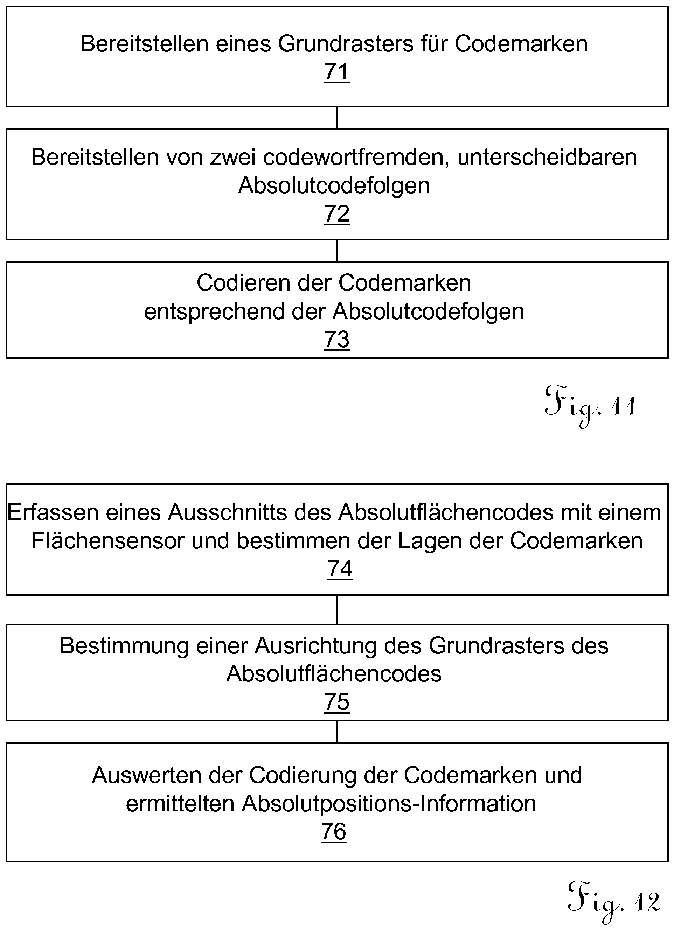

**Fig. 11,** zeigt ein Beispiel eines vereinfachten Blockdiagramms der Erfindung, welches auf die Erstellung eines erfindungsgemässen Flächen-Positionscodes gerichtet ist.

Darin steht Block 71 für ein Bereitstellen eines, vorzugsweise regelmässigen, Grundrasters für Codemarken, beispielsweise wie dieses in einer Ausführungsform weiter oben im Detail beschrieben wurde.

In Block 72 erfolgt ein Bereitstellen von zwei codewortfremden, und somit unterscheidbaren Absolutcodefolgen. Dabei kann beispielsweise wie zuvor in einer Ausführungsform erläutert, eine einzige, gemeinsame Maximalfolge in zwei elementfremde Folgen zerlegt werden.

In Block 73 erfolgt dann ein Codieren der Codemarken des Grundrasters durch versetzen der Codemarken gegenüber ihren Grundrasterpositionen entsprechend den Codewerten der Absolutcodefolgen. Dabei werden die beiden Absolutcodefolgen entgegen ihrer Codefolgenrichtung jeweils abwechslungsweise angeordnet und jedes der dabei entstehenden Codezeilenpaare jeweils in Coderichtung in ihrer Codefolgenposition unterschiedlich Phasenverschoben.

**Fig. 12,** zeigt ein Beispiel eines vereinfachten Blockdiagramms der Erfindung, welches auf die erfindungsgemässe Auswertung eines erfindungsgemässen Flächen-Positionscodes gerichtet ist.

Block 74 steht für ein Erfassen eines Ausschnitts des Absolutflächencodes mit einem Flächensensor und bestimmen der Lagen der Codemarken im erfassten Ausschnitt in Bezug auf den Flächensensor, insbesondere mit einem Bestimmen der Lagen der Schwerpunkte der Codemarken wie dies weiter oben in den unterschiedlichen Ausführungsformen erläutert wurde. Dabei kann ein spezieller Flächensensor zur Schwerpunktsbestimmung mit einem analogen integrieren von Pixelwerten entsprechend des oben angeführten speziellen Aspekts der Erfindung zur Anwendung kommen.

In Block 75 erfolgt eine Bestimmung einer Ausrichtung des Grundrasters des Flächenpositionscodes anhand der zuvor ermittelten Lagen der Schwerpunkte, beispielsweise wie dies bereits weiter oben im Detail ausgeführt wurde.

In Block 76 erfolgt ein Auswerten der Codierung der Codemarken entsprechend der zuvor bestimmten Ausrichtung und eine Bestimmung einer Absolutpositions-Information anhand einer Auswertung der Codemarken bezüglich ihrer Codierung, insbesondere in zumindest drei Codezeilen in Ausrichtungsrichtung und anhand der zwei unterschiedlichen Absolutcodefolgen sowie einem Phasenversatz zwischen den Zeilen, wie dies weiter oben anhand von Beispielen im Detail erläutert wurde. In einem weiteren Schritt kann dann eine genaue Verortung der ermittelten Absolutpositions-Information anhand der in Block 74 bestimmten Lagen der Codemarken erfolgen. Somit kann die absolute Ausrichtung und/oder die absolute Lage des Flächensensors gegenüber dem Flächen-Positionscode bereitgestellt werden.

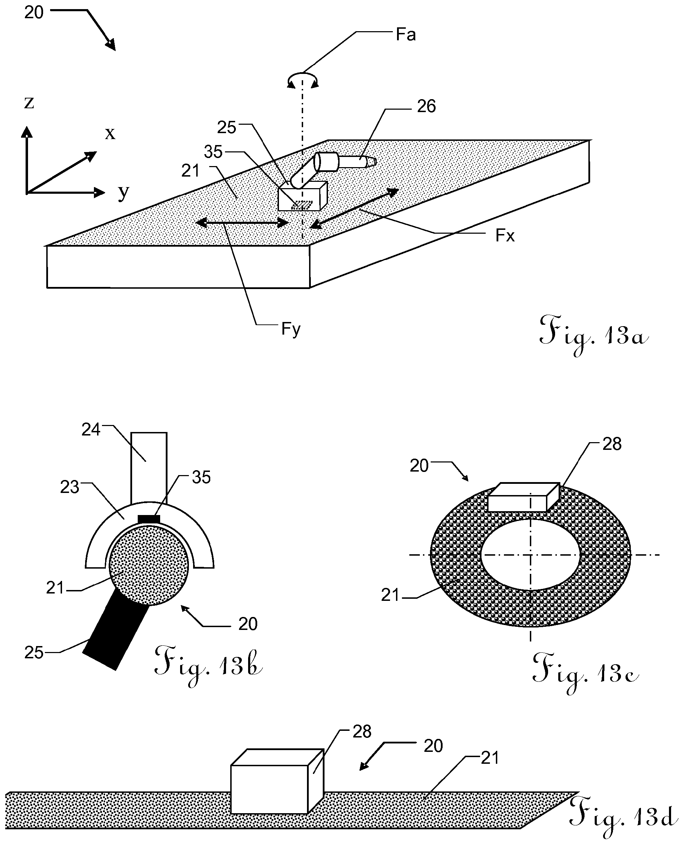

**Fig. 13a** zeigt ein Beispiel einer Ausführungsform, bei welcher eine plane Fläche mit einem erfindungsgemässen Absolutcode 21 zur Positionsbestimmung versehen ist. Diese erfindungsgemässe Codierung kann beispielsweise aus Codemarken bestehen, welche aufgedruckt, als Folie aufgeklebt, mechanisch oder mit Laser eingraviert, ... sind. In der speziellen gezeigten Ausführungsform handelt es sich um einen Tisch einer Koordinatenmessmaschine 20, auf welchem der erfindungsgemässe absolute 2-D Code 21 aufgebracht ist. Auf diesem Tisch 20 kann sich ein oder mehrere bewegliche Mess- und/oder Bearbeitungsgebilde 25 befinden, welche mit einem Flächensensor 35 zur erfindungsgemässen Positionscodebestimmung ausgebildet sind. Durch bewegen dieser Gebilde 28 auf dem als Messtisch ausgebildeten Absolutmesssystem 20, beispielsweise gleitend, fahrend über Rollen oder durch versetzen, können Werkstücke oder andere Gegenstände vermessen werden. Beispielsweise kann das Gebilde 25 hierzu mit einem Messtaster 26 oder einer anderen Messeinrichtung ausgestattet sein. Dabei wird die Positionsbestimmung zumindest in den zwei Freiheitsgraden $F_x$ und $F_y$ durchgeführt, vorzugsweise als eindeutige Absolutpositionswerte auf der gesamten codierten Fläche. Optional kann zudem eine Drehlage $F_r$ des Gebildes 25 gegenüber dem Positionscode 21 in der Eben der codierten Fläche bestimmt werden, vorzugsweise ebenfalls als absolute Drehlage. Optional können auch noch Lageinformationen in einem oder mehreren der verbleibenden Freiheitsgrade bestimmt werden, was allenfalls mit einer reduzierten Genauigkeit gegenüber $F_x$, $F_y$ und $F_r$, beispielsweise zur Unterscheidung eines ordnungsgemässen Betriebs, von Fehlstellungen und/oder zur numerischen Kompensation allfälliger Fehlstellungen anhand eines mathematischen Modells oder durch mechanische Justage.

**Fig. 13b** zeigt ein Beispiel einer Ausführungsform eines absoluten Messsystems 20, bei welcher eine erfindungsgemäss absolutcodierte Kugel 21 in einem Kugel-Winkelencoder gezeigt ist, von deren Oberfläche ein Ausschnitt mit einem Flächensensor 35 erfasst wird, welcher in der Gelenkpfanne 23 gezeigt ist. Anhand der dabei erfassten Codemarken werden zumindest zwei oder drei Freiheitsgrade des Gelenks Zwischen den Objekten 24 und 25 zugleich vermessen. Anstelle einer Kugel 21 kann in einer anderen Ausführungsform das gelenk beispielsweise auch zylindrisch ausgebildet sein, mit oder ohne Möglichkeit eines Versatzes entlang der Zylinderachse, welcher erfindungsgemäss ebenfalls erfassbar ist.

Ein erfindungsgemässes Positionscodemuster 21 - mit oder ohne einer oder mehrerer der optionalen Varianten - wie dieses in unterschiedlichen Ausführungsformen zuvor beschrieben wurde, ist ebenso in einer erfindungsgemässen Ausführungsform eines absoluten Messsystems 20 wie einem in **Fig. 13c** gezeigten Winkelencoders oder eines in **Fig. 13d** gezeigten Linearpositionsencoders anwendbar. Die Erfindung betrifft somit neben einem zwei-, drei-, vier-, fünf- oder sechs-dimensionalen Positionsgeber auch einen derartigen Linear- oder Winkelencoder mit einem erfindungsgemässen Positionscodemuster. Ein Winkel- oder Linearencoder kommt im allgemeinen zwar nur die primäre Aufgabe zu, eine Positionsbestimmung in einem Freiheitsgrad durchzuführen, jedoch kann mit dem erfindungsgemässen Positionscode beispielsweise auch eine derartige Positionsbestimmung verbessert werden. Dabei können beispielsweise mit zumindest einem einzigen Matrix-Sensor 35 mechanische oder physikalische Fehler (wie z.B. in EP 2 498 076 oder ähnlichen) des Encoders oder des Messaufbaus detektiert, quantifiziert und/oder numerisch kompensiert werden. Dabei kann mit dem erfindungsgemässen Positionscodemuster Informationen in mehr als einem Freiheitsgrad zwischen Positionscode und Matrix-Sensor bestimmt werden und mit den zusätzlichen zum primär interessierenden Freiheitsgrad ermittelten Informationen der ermittelte Positionswert im primären Freiheitsgrad verbessert werden, beispielsweise indem allfällige Positionsfehler durch eine Abweichung in einem der zusätzlichen Freiheitsgrade ermittelt, statistisch bewertet oder numerisch kompensiert wird.

In derartigen Ausführungsformen kann die zu codierende Fläche beispielsweise geschlossen sein, etwa zu einem Band, Ring, Torus, Zylinder, Kugelabschnitt oder anderen. Dabei kann sich zumindest ein Rand des Flächen-Positionscodemusters mit einer anderen Stelle des Positionscodes schliessen, wobei dabei nicht zwingend überall der volle mögliche Codewertebereich ausgeschöpft werden muss. In einer speziellen Ausführungsform kann dabei optional auch das Grundraster derart angepasst werden, dass dieses nicht kartesisch, sondern der zu codierenden Fläche angepasst ist, also beispielsweise die Zeilen und/oder Spalten nicht zwingend überall geradlinig und/oder überall äquidistant sind.

In Gegensatz zu anderen Lösungen, wie Beispielsweise EP 1 632 754, EP 1 944 582 oder dergleichen, ist dabei nur ein einziges Sensorelement, und nicht zwingend mehrere Sensorelemente nötig, um Fehler wie Exzentrizität, Taumeln, Temperaturdehnungen, Axialverschiebungen, etc. zu ermitteln und gegebenenfalls auf Basis eines entsprechenden mathematischen Modells diese Fehler oder deren Einflüsse bei der Ermittlung von Messwerten des einzigen Freiheitsgrades welchen es zu bestimmen gilt, zu Berücksichtigen oder Kompensieren. Alternativ oder optional können auch qualitative oder quantitative Fehlerindikatoren bereitgestellt werden.

In speziellen Ausführungsformen der Beispiele von Fig. 13a, Fig. 13b, Fig. 13c und Fig. 13d kann dabei ein erfindungsgemässer Flächensensor 35 zur Schwerpunktsbestimmung zum Einsatz kommen.

Weitere, hier in den Beispielen nicht explizit aufgeführte Ausführungsformen, Details und Merkmalskombinationen der vorliegenden Erfindung, wie diese in den Patentansprüchen beansprucht wird, sind dem Fachmann geläufig.

## Patentansprüche

1. Massverkörperung mit einem Flächen-Positionscodemuster (21) für eine absolut zu codierende Fläche, mit einer Anordnung von Codemarken (11) in einem Grundraster, von welchem Flächen-Positionscodemuster (21) zumindest ein Teilausschnitt mit einem Matrix-Sensor (28) zur Positionsbestimmung in zumindest zwei Freiheitsgraden auslesbar ist,
   **dadurch gekennzeichnet, dass**
   eine erste Absolutcodefolge in einer Aneinanderreihung der Codemarken (11) in einer ersten Zeilenrichtung des Grundrasters als erste Zeile auf der zu codierenden Fläche ausgebildet ist, und
   entlang einer, auf die erste Zeile folgenden zweiten Zeile in der ersten Zeilenrichtung die Codemarken (11) mit einer, zur ersten Absolutcodefolge codewortfremden, zweiten Absolutcodefolge codiert sind,
   wobei die erste und die zweite Zeile ein Zeilenpaar bilden, und
   in einem darauf folgenden Zeilenpaar die beiden Absolutcodefolgen jeweils in der ersten Zeilenrichtung im Grundraster mit einem Versatz im Grundraster angeordnet sind.

2. Massverkörperung mit einem Flächen-Positionscodemuster (21) nach Anspruch 1, **dadurch gekennzeichnet, dass** die erste und zweite Absolutcodefolge jeweils Teile einer einzigen, gemeinsamen Maximalfolge sind, welche in die zumindest zwei Teile mit unterschiedlicher primärer Periodenlängen geteilt ist.

3. Massverkörperung mit einem Flächen-Positionscodemuster (21) nach Anspruch 1 oder 2, **dadurch gekennzeichnet, dass** die Codemarken (11) derart ausgebildet sind, dass diese mittels einem optischen Matrix-Sensor (28) wie einem CCD- oder CMOS-Sensor anhand ihrer Volumenschwerpunkte in ihrer Position in Bezug auf den optischen Matrix-Sensor (28) und/oder anhand ihres Volumens in ihrer Grösse erfassbar sind.

4. Massverkörperung mit einem Flächen-Positionscodemuster (21) nach Anspruch 1, 2 oder 3, **dadurch gekennzeichnet, dass** das Flächen-Positionscodemuster (21) mit einheitlichen, uniformen Codemarken (11) aufgebaut ist, vorzugsweise mit Codemarken (11) mit konvexen Aussenkonturen.

5. Massverkörperung mit einem Flächen-Positionscodemuster (21) nach einem der Ansprüche 1 bis 4, **dadurch gekennzeichnet, dass** die Absolutcodefolgen mit einer Wertcodierung einer der Codemarken (11) in Form einer geometrischen Abweichung der Codemarke (11) von einer Sollposition im Grundraster ausgebildet sind.

**6.** Massverkörperung mit einem Flächen-Positionscodemuster (21) nach Anspruch 5, **dadurch gekennzeichnet, dass** das Grundraster orthogonal oder hexagonal ist.

**7.** Massverkörperung mit einem Flächen-Positionscodemuster (21) nach Anspruch 5 oder 6, **dadurch gekennzeichnet, dass** die Abweichung kleiner als 1/3, vorzugsweise in etwa 1/10, einer Periode des Grundrasters ist.

**8.** Massverkörperung mit einem Flächen-Positionscodemuster (21) nach einem der Ansprüche 1 bis 7, **dadurch gekennzeichnet, dass** die erste Absolutcodefolge und die zweite Absolutcodefolge dieselbe Coderichtung im Grundraster aufweisen.

**9.** Massverkörperung mit einem Flächen-Positionscodemuster (21) nach Anspruch 8, **dadurch gekennzeichnet, dass** die erste Absolutcodefolge und die zweite Absolutcodefolge nichtorthogonal zueinander stehen.

**10.** Absolutes Messsystem (20) mit einer Massverkörperung mit einem Flächen-Positionscodemuster (21) nach einem der Ansprüche 1 bis 9 und einem optischen Matrix-Sensor (28) zur Schwerpunktsbestimmung von Codemarken (11) der Massverkörperung.

**11.** Absolutes Messsystem (20) nach Anspruch 10 **dadurch gekennzeichnet, dass** der optische Matrix-Sensor (28) derart ausgebildet ist, dass mit einem Array von Sensorelementen, insbesondere in einer regelmässigen zweidimensionalen Anordnung,
eine zeilenweise Auslesung erfolgt, bei welcher Auslesung für eine Zeile des Arrays,
von einem Überschreiten eines definierten Sumpf-Schwellenwerts (40) durch den ausgelesenen Wert bei einem ersten Sensorelement,
bis zu einem Unterschreiten des Sumpf-Schwellwerts (40) bei einem zweiten Sensorelement,
ein Integrieren (43) der ausgelesenen Werte der Sensorelemente dieser Zeile des Arrays in einen Summenwert erfolgt,
wobei jeweils ein erster Positionsindex (46) des ersten Sensorelements und ein zweiter Positionsindex (47) des zweiten Sensorelements entlang der Sensorzeile erfasst wird und
vom Flächensensor (21) der Summenwert sowie der erste und zweite Positionsindex bereitgestellt wird, insbesondere in digitalisierter Form bereitgestellt wird.

**12.** Verfahren zur Absolutpositionscodierung von Oberflächen mit einem Absolutcodemuster (21), welches mit

    o einem Bereitstellen eines, vorzugsweise regelmässigen, Grundrasters für Codemarken (11),
    o einem Bereitstellen von zwei codewortfremden Absolutcodefolgen,
    o einem Codieren der Codemarken (11) des Grundrasters mit einem Versetzen der Codemarken (11) gegenüber ihren Grundrasterpositionen entsprechend den Codewerten der Absolutcodefolgen,
    wobei beide der Absolutcodefolgen entgegen ihrer Codefolgenrichtung jeweils abwechslungsweise angeordnet und jedes der dabei entstehenden Codezeilenpaare jeweils in Codefolgenrichtung in ihrer Codefolgenposition im Raster unterschiedlich Phasenverschoben sind, und
    o einem Aufbringen des resultierenden Absolutcodemusters (21) auf eine zu codierende Oberfläche als Massverkörperung.

**13.** Verfahren zur Absolutpositionscodierung von Oberflächen mit einem Absolutcodemuster (21) nach Anspruch 12, **dadurch gekennzeichnet, dass** das Bereitstellen von zwei codewortfremden Absolutcodefolgen aus einer einzigen, gemeinsamen Maximalfolge, welche in zwei elementfremde Folgen zerlegt ist, erfolgt.

**14.** Verfahren zur Auswertung einer, entsprechend einem der Ansprüche 1 bis 9 ausgebildeten Massverkörperung mit einem Flächen-Absolutcodemusters (21), mit

    o einem Erfassen eines Ausschnitts des Flächen-Absolutcodemusters (21) mit einem optischen Matrix-Sensor (28) und bestimmen einer Lagen von Codemarken (11) des Flächen-Absolutcodemusters (21) im erfassten Ausschnitt in Bezug auf den optischen Matrix-Sensor (28), insbesondere mit einem bestimmen der Lagen der Schwerpunkte der Codemarken (11), insbesondere mit einem optischen Matrix-Sensor (28) zur Schwerpunktsbestimmung,
    ◦ einer Bestimmung einer Ausrichtung eines Grundrasters des Flächen-Absolutcodemusters (21) anhand der zuvor ermittelten Lagen der Codemarken (11),

∘ einem Auswerten einer Codierung der Codemarken (11) entsprechend der zuvor bestimmten Ausrichtung
∘ einer Bestimmung einer Absolutpositions-Information anhand einer Auswertung der Codierung der Codemarken (11),
∘ insbesondere wobei die Auswertung in mehreren, in der Ausrichtung des Grundrasters ausgerichteten Zeilen erfolgt, welche zumindest zwei codewortfremde Absolutcodefolgen und auf dem Grundraster einen Phasenversatz zwischen den Zeilen aufweisen,
∘ einer Verortung der ermittelten Absolutpositions-Information anhand bestimmter Lagen der Codemarken (11) welche der Absolutpositions-Information zugrunde liegen, und
∘ einer Bereitstellung der Ausrichtung (Fx,Fx,Fr) und/oder der absoluten Lage des optischen Matrix-Sensors (28) gegenüber dem Flächen-Absolutcodemuster (21).

15. Computerprogrammprodukt mit Programmcode, welcher gespeichert auf einem Datenträger oder als elektromagnetische Welle bereitgestellt ist, und welcher zur Ausführung eines Verfahrens nach Anspruch 14 auf einem Digitalrechner ausgebildet ist, zur Positionsbestimmung anhand einer Massverkörperung mit einem Flächen-Positionscodemusters (21) nach einem der Ansprüche 1 bis 9, wenn der Programmcode in einem absoluten Messsystem (20) nach Anspruch 10 oder 11 ausgeführt wird.

**Claims**

1. Material Measure with an area position code pattern (21) for an area to be encoded in absolute terms, comprising an arrangement of code marks (11) in a basic grid, at least one portion of said area position code pattern (21) being readable by a matrix sensor (28) for determining positions in at least two degrees of freedom,
**characterized in that**
a first absolute code sequence in a stringing-together of the code marks (11) in a first line direction of the basic grid is embodied as first line on the area to be encoded, and
the code marks (11) are encoded in the first line direction with a second absolute code sequence along a second line which follows the first line, which second absolute code sequence is codeword-distinct with respect to the first absolute code sequence,
wherein the first line and the second line form a line pair, and
the two absolute code sequences are each arranged with an offset in the first line-direction in the basic grid in a subsequent line pair.

2. Material Measure with an area position code pattern (21) according to Claim 1, **characterized in that**
the first absolute code sequence and second absolute code sequence are each part of a single, common maximum sequence which is subdivided into the at least two parts with different primary period lengths.

3. Material Measure with an area position code pattern (21) according to Claim 1 or 2, **characterized in that**
the code marks (11) are configured in such a way that they are detectable by means of an optical matrix sensor (28) such as a CCD or CMOS sensor on basis of their volume centroids in terms of their position in relation to the optical matrix sensor (28) and/or on basis of their volume in terms of their size.

4. Material Measure with an area position code pattern (21) according to Claim 1, 2 or 3, **characterized in that**
the area position code pattern (21) is built up by standardized, uniform code marks (11), preferably by code marks (11) comprising convex external contours.

5. Material Measure with an area position code pattern (21) according to any one of Claims 1 to 4, **characterized in that**
the absolute code sequences are embodied with a value encoding of one of the code marks (11) in the form of a geometric deviation of the code mark (11) from an intended position in the basic grid.

6. Material Measure with an area position code pattern (21) according to Claim 5, **characterized in that**
the basic grid is orthogonal or hexagonal.

7. Material Measure with an area position code pattern (21) according to any one of Claims 5 or 6, **characterized in that**
the deviation is less than 1/3 of a period of the basic grid, preferably approximately 1/10.

8. Material Measure with an area position code pattern (21) according to any one of Claims 1 to 7, **characterized in that**
the first absolute code sequence and the second absolute code sequence have the same code direction in the basic grid.

9. Material Measure with an area position code pattern (21) according to Claim 8, **characterized in that** the first absolute code sequence and the second absolute code sequence are arranged non-orthogonal to one another.

10. Absolute measurement system (20) with a Material Measure comprising an area position code pattern (21) according to any one of Claims 1 to 9 and an optical matrix sensor (28) for determining centroids of code marks (11) of the Material Measure.

11. Absolute measurement system (20) according to claim 10, **characterized in that** the optical matrix sensor (28) is embodied in such a way that, with an array of sensor elements, in particular in a regular two-dimensional arrangement, there is a line-by-line read out, for which read out for a line of the array there is, from an overshooting of a defined trough threshold (40) by the read value at a first sensor element to an undershooting of the trough threshold (40) at a second sensor element,
an integration (43) of the read values of the sensor elements of this line of the array into a summed value,
wherein a first position index (46) of the first sensor element and a second position index (47) of the second sensor element are each detected along the sensor line and
the summed value and the first position index and second position index are provided by the area sensor (21), in particular provided in a digitized form.

12. Method for encoding absolute positions of surfaces with an absolute code pattern (21), which comprises

   ○ provision of a preferably regular basic grid for code marks (11),
   ○ provision of two codeword-distinct absolute code sequences,
   ○ encoding of the code marks (11) of the basic grid with an offset of the code marks (11) in relation to the basic grid positions thereof in accordance with the code values of the absolute code sequences,
   ○ wherein both of the absolute code sequences are respectively arranged in an alternate manner counter to the code sequence direction thereof and each code line pair arising in the process respectively has a different phase shift in the grid in terms of the code sequence position thereof in the code sequence direction, and
   ○ an applying of the resulting absolute code pattern (21) as Material Measure on a surface to be coded.

13. Method for encoding absolute positions of surfaces with an absolute code pattern (21) according to claim 12 **characterized in that**
the provision of two codeword-distinct absolute code sequences is done from a single, common maximum sequence which is decomposed into two distinct element sequences.

14. Method for evaluating a Material Measure with an area absolute code pattern (21) embodied in accordance with any one of Claims 1 to 9, comprising

   ○ detecting a section of the area absolute code pattern (21) by an optical matrix sensor (28) and determining a situation of code marks (11) of the area absolute code pattern (21) in the detected section in relation to the optical matrix sensor (28), in particular comprising determining the situations of the centroids of the code marks (11), in particular using an optical matrix sensor (28) for determining centroids,
   ○ determining an alignment of a basic grid of the area absolute code pattern (21) on the basis of the previously established situations of the code marks (11),
   ○ evaluating an encoding of the code marks (11) in accordance with the previously determined alignment,
   ○ determining absolute position information on the basis of evaluating the encoding of the code marks (11),
   ○ in particular, wherein the evaluation is carried out in a plurality of lines aligned in the alignment of the basic grid, which lines have at least two distinct codeword absolute code sequences and, on the basic grid, a phase offset between the lines,
   ○ locating the established absolute position information on the basis of determined situations of the code marks (11) which underlie the absolute position information, and
   ○ providing the alignment (Fx, Fx, Fr) and/or the absolute situation of the optical matrixsensor (28) in relation to the area absolute code pattern (21).

15. Computer program product comprising program code, which is stored on a data medium or provided as an electromagnetic wave and which is embodied to execute a method according to Claim 14 on a digital computer, for determining the position on the basis of a Material Measure with an area position code pattern (21) according to any one of Claims 1 to 9, when the program code is executed in an absolute measurement system (20) according to Claim 10 or 11.

**Revendications**

1. Mesure matérialisée dotée d'un motif surfacique de codage de position (21) pour une surface à coder de manière absolue, comportant une disposition de marques de codage (11) dans une grille de base, au moins un sous-ensemble dudit motif surfacique de codage de position (21) pouvant être lu par un capteur matriciel (28) pour effectuer une détermination de position selon au moins deux degrés de liberté,
**caractérisée en ce que**
une première séquence de codage absolu est formée, en tant que première ligne, par un alignement des marques de codage (11) dans une première direction de ligne de la grille de base sur la surface à coder, et
le long d'une deuxième ligne qui suit la première ligne dans ladite première direction de ligne, les marques de codage (11) sont codées au moyen d'une deuxième séquence de codage absolu dont le mot de code est différent de celui de la première séquence de codage absolu,
lesdites première et deuxième lignes formant une paire de lignes, et
dans une paire de lignes qui suit, les deux séquences de codage absolu sont chacune disposées dans la première direction de ligne de la grille de base, avec un décalage dans la grille de base.

2. Mesure matérialisée dotée d'un motif surfacique de codage de position (21) selon la revendication 1, **caractérisée en ce que**
la première et la deuxième séquence de codage absolu constituent chacune une partie d'une séquence maximale unique commune, qui est divisée en les au moins deux parties avec une longueur périodique primaire différente.

3. Mesure matérialisée dotée d'un motif surfacique de codage de position (21) selon la revendication 1 ou 2, **caractérisée en ce que**
les marques de codage (11) sont conçues de manière à pouvoir être captées par un capteur matriciel optique (28) tel qu'un capteur CCD ou CMOS, leur position par rapport au capteur matriciel optique (28) pouvant être captée au moyen de leur centre de gravité volumique et/ou leur taille au moyen de leur volume.

4. Mesure matérialisée dotée d'un motif surfacique de codage de position (21) selon la revendication 1, 2 ou 3, **caractérisée en ce que**
le motif surfacique de codage de position (21) est construit avec des marques de codage (11) cohérentes et uniformes, de préférence avec des marques de codage (11) présentant des contours extérieurs convexes.

5. Mesure matérialisée dotée d'un motif surfacique de codage de position (21) selon l'une des revendications 1 à 4, **caractérisée en ce que**
les séquences de codage absolu sont conçues avec un codage de la valeur d'une des marques de codage (11) sous forme d'un écart géométrique de la marque de codage (11) par rapport à une position théorique dans la grille de base.

6. Mesure matérialisée dotée d'un motif surfacique de codage de position (21) selon la revendication 5, **caractérisée en ce que**
la grille de base est orthogonale ou hexagonale.

7. Mesure matérialisée dotée d'un motif surfacique de codage de position (21) selon la revendication 5 ou 6, **caractérisée en ce que**
l'écart est inférieur à 1/3 et correspond de préférence à environ 1/10 d'une période de la grille de base.

8. Mesure matérialisée dotée d'un motif surfacique de codage de position (21) selon l'une des revendications 1 à 7, **caractérisée en ce que**
la première séquence de codage absolu et la deuxième séquence de codage absolu présentent la même direction de codage dans la grille de base.

9. Mesure matérialisée dotée d'un motif surfacique de codage de position (21) selon la revendication 8, **caractérisée en ce que**

la première séquence de codage absolu et la deuxième séquence de codage absolu sont disposées de manière non orthogonale.

10. Système de mesure absolue (20) comprenant une mesure matérialisée dotée d'un motif surfacique de codage de position (21) selon l'une des revendications 1 à 9 et un capteur matriciel optique (28) destiné à déterminer le centre de gravité de marques de codage (11) de la mesure matérialisée.

11. Système de mesure absolue (20) selon la revendication 10, **caractérisé en ce que**
le capteur matriciel optique (28) est conçu de manière que, avec un réseau d'éléments capteurs, notamment dans une disposition bidimensionnelle régulière,

- il se produit une lecture ligne par ligne dans le cadre de laquelle, pour une même ligne du réseau,
à partir de l'instant où la valeur lue au moyen d'un premier élément capteur devient supérieure à un seuil bas (40) défini,
jusqu'à l'instant où la valeur lue au moyen d'un deuxième élément capteur devient inférieure au seuil bas (40),
- il est calculé une intégration (43) des valeurs lues au moyen des éléments capteurs de cette ligne du réseau, produisant une valeur totale,
un premier indice de position (46) du premier élément capteur et un deuxième indice de position (47) du deuxième élément capteur étant captés le long de la ligne de capteurs, et
- la valeur totale ainsi que le premier et le deuxième indice de position sont fournis par le capteur surfacique (21), notamment sous forme numérisée.

12. Procédé de codage de la position absolue de surfaces au moyen d'un motif de codage absolu (21), comprenant

◦ la fourniture d'une grille de base, de préférence régulière, pour des marques de codage (11),
◦ la fourniture de deux séquences de codage absolu dont le mot de code est différent,
◦ un codage des marques de codage (11) de la grille de base avec un décalage des marques de codage (11) par rapport à leur position dans la grille de base, ledit décalage correspondant aux valeurs de code des séquences de codage absolu,
les deux séquences de codage absolu étant disposées en alternance à l'opposé de leur direction de séquence de code, et chaque paire de lignes de code qui en résulte subissant un décalage de phase différent dans la direction de séquence de code quant à sa position de séquence de code dans la grille, et
◦ l'apposition du motif de codage absolu (21) résultant sur une surface à coder en tant que mesure matérialisée.

13. Procédé de codage de la position absolue de surfaces au moyen d'un motif de codage absolu (21) selon la revendication 12, **caractérisé en ce que** il est fourni deux séquences de codage absolu dont le mot de code est différent, à partir d'une séquence maximale unique commune qui est décomposée en deux séquences dont l'élément est différent.

14. Procédé d'évaluation d'une mesure matérialisée dotée d'un motif surfacique de codage absolu (21) et conçue selon l'une des revendications 1 à 9, comprenant

◦ la saisie d'un extrait du motif surfacique de codage absolu (21) au moyen d'un capteur matriciel optique (28) et la détermination de la position des marques de codage (11) du motif surfacique de codage absolu (21) dans l'extrait saisi par rapport au capteur matriciel optique (28), notamment la détermination de la position des centres de gravité des marques de codage (11), notamment au moyen d'un capteur matriciel optique (28) destiné à la détermination des centres de gravité,
◦ la détermination de l'orientation d'une grille de base du motif surfacique de codage absolu (21) à partir des positions précédemment obtenues des marques de codage (11),
◦ l'évaluation d'un codage des marques de codage (11) selon l'orientation précédemment déterminée,
◦ la détermination d'une information de position absolue à partir de l'évaluation du codage des marques de codage (11),
◦ l'évaluation étant notamment effectuée dans plusieurs lignes orientées selon l'orientation de la grille de base, qui présentent au moins deux séquences de codage absolu dont le mot de code est différent et qui présentent un décalage de phase entre les lignes sur la grille de base,
◦ la localisation de l'information de position absolue obtenue, à partir des positions déterminées des marques de codage (11) qui sous-tendent l'information de position absolue, et
◦ la fourniture de l'orientation (Fx, Fx, Fr) et/ou de la position absolue du capteur matriciel optique (28) par rapport au motif surfacique de codage absolu (21).

**15.** Produit-programme d'ordinateur comportant un code de programme enregistré sur un support de données ou disponible sous forme d'onde électromagnétique et conçu pour exécuter un procédé selon la revendication 14 sur un ordinateur numérique, destiné à déterminer des positions au moyen d'une mesure matérialisée dotée d'un motif surfacique de codage de position (21) selon l'une des revendications 1 à 9, lorsque le code de programme est exécuté dans un système de mesure absolue (20) selon la revendication 10 ou 11.

Fig. 1a

Fig. 1b

Fig. 1c

Fig. 1d

Fig. 1e

Fig. 1f

Fig. 1g

Fig. 2

Fig. 3

Fig. 4a

Fig. 4b

Fig. 5a

Fig. 5b

Fig. 5c

Fig. 5d

Fig. 6

Fig. 7a

Fig. 7b

$\mathcal{F}ig.\,8$

$\mathcal{F}ig.\,9$

Fig. 10

Bereitstellen eines Grundrasters für Codemarken
71

Bereitstellen von zwei codewortfremden, unterscheidbaren
Absolutcodefolgen
72

Codieren der Codemarken
entsprechend der Absolutcodefolgen
73

*Fig. 11*

Erfassen eines Ausschnitts des Absolutflächencodes mit einem
Flächensensor und bestimmen der Lagen der Codemarken
74

Bestimmung einer Ausrichtung des Grundrasters des
Absolutflächencodes
75

Auswerten der Codierung der Codemarken und
ermittelten Absolutpositions-Information
76

*Fig. 12*

Fig. 13a

Fig. 13b

Fig. 13c

Fig. 13d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1147376 A
- EP 1750099 A
- DE 69933050
- DE 602004009429
- EP 2169357 A
- EP 2546613 A
- WO 2010112082 A
- EP 1099936 A
- EP 1473549 A
- EP 2133824 A
- US 6548768 B

- US 20070246547 A
- WO 0126032 A
- WO 2004102123 A1
- WO 02084473 A1
- CH 704584
- EP 0268558 A
- EP 0368605 A
- EP 2498076 A
- EP 1632754 A
- EP 1944582 A